# EUROPÄISCHE PATENTSCHRIFT

(11) **EP 1 209 927 B1**
(45) Veröffentlichungstag und Bekanntmachung des Hinweises auf die Patenterteilung: **04.05.2011**
(21) Anmeldenummer: 01440366.1
(22) Anmeldetag: 29.10.2001
(51) Int. Cl.: H04Q 3/72, H04Q 11/04, H04M 1/57

(54) **Verfahren und Vorrichtungen zur Rufidentifikation**
Method and arrangement for call identification
Méthode et dispositifs d'identification d'appel

(30) Priorität: 18.11.2000 DE 10057247
(43) Veröffentlichungstag der Anmeldung: 29.05.2002
(73) Patentinhaber: Alcatel Lucent, 75008 Paris (FR)
(72) Erfinder: Lautenschlager, Wolfgang, 71287 Weissach-Flacht (DE); Weik, Hartmut, 70195 Stuttgart (DE)
(74) Vertreter: Schmidt, Werner Karl

(56) Entgegenhaltungen:
- EP-B- 0 598 138
- WO-A-95/05045
- DE-A1- 19 543 040
- DE-A1- 19 838 944
- US-A- 4 899 358

## Beschreibung

Die vorliegende Erfindung betrifft ein Verfahren zur Rufidentifikation eines über ein Telekommunikationsnetz Anrufenden an einer Ziel-Telekommunikationseinrichtung eines Angerufenen, ein Netzwerkeinrichtungs-Programm-Modul hierfür, eine Netzwerkeinrichtung hierfür, ein Quell-Programm-Modul hierfür sowie eine Quell-Telekommunikationseinrichtung hierfür.

Beim Aufbau einer Rufverbindung über ein Telekommunikationsnetz, beispielsweise ein leitungsvermitteltes (engl. circuit switched) öffentliches, leitungsgebundenes und/oder mobiles Telekommunikationsnetz, wird dem Angerufenen der jeweilige Ruf von seiner Ziel-Telekommunikationseinrichtung, z.B. von seinem Telefon-Endgerät, im Allgemeinen akustisch durch ein Klingelzeichen oder eine Rufmelodie signalisiert. Ferner wird bei modernen ISDN- oder Mobilfunk-Endgeräten (ISDN = Integrated Services Digital Network), teilweise bei analogen Endgeräten, auch die Rufnummer des Anrufers auf einem Display angezeigt, so dass der Angerufene eine Information zur Identifizierung des Anrufers erhält. Die Rufnummer wird der Ziel-Telekommunikationseinrichtung des Angerufenen beim Aufbau der Rufverbindung als Identifikationsdaten zur Identifikation des Anrufers übermittelt. Die Ziel-Telekommunikationseinrichtung empfängt die Rufnummer in einer sogenannten CLI-Nachricht im Zusammenhang mit dem Aufbau der Rufverbindung (CLI = Calling Line Identifier). Allerdings muss der Angerufene nach Ertönen der akustischen Signalisierung zunächst auf das Display blicken, um die Information zur Identifizierung des Anrufers zu erfassen.

Bei manchen Endgeräten kann eine Rufmelodie oder eine Klingelsequenz ausgewählt oder individuell eingeben werden, so dass ein Angerufener an dem jeweiligen akustischen Signal erkennen kann, dass sein Endgerät und nicht etwa das Endgerät einer in seiner Nähe befindlichen Person angerufen wird. Diese Konfigurationsmöglichkeit für die akustische Signalisierung wird insbesondere bei Mobilfunk-Endgeräten genutzt. Aber auch im Falle einer am Endgerät des Angerufenen individuell konfigurierten akustischen Signalisierung muss dieser zunächst auf das Display seines Endgeräts blicken, um den gegebenenfalls per CLI-Nachricht identifizierten Anrufer zu ermitteln.

In dem europäischen Patent EP 0 598 138 B1 ist offenbart, dass je nach empfangener Anrufer-Identifikation der Anruf am Empfangsgerät auf eine bestimmte Art und Weise angezeigt wird.

In der deutschen Patentanmeldung DE 195 43 040 A1 ist offenbart, dass die über einen D-Kanal übertragene Rufnummer des Anrufenden einem Sprachsignal oder einer Zeichenfolge zur Anzeige am Empfangsgerät zugeordnet wird.

Es ist daher Aufgabe der vorliegenden Erfindung, eine komfortable Rufidentifikation eines über ein Telekommunikationsnetz Anrufenden an einer Ziel-Telekommunikationseinrichtung eines Angerufenen zu schaffen.

Diese Aufgabe wird gelöst durch ein Verfahren gemäß der technischen Lehre des Anspruchs 1.

Zur Lösung der Aufgabe sind ferner vorgesehen: ein Netzwerkeinrichtungs-Programm-Modul gemäß der technischen Lehre des Anspruchs 9, eine Netzwerkeinrichtung gemäß der technischen Lehre des Anspruchs 10, ein Quell-Programm-Modul gemäß der technischen Lehre des Anspruchs 11 sowie eine Quell-Telekommunikationseinrichtung gemäß der technischen Lehre des Anspruchs 12.

Der Erfindung liegt dabei der Gedanke zugrunde, dass die Ziel-Telekommunikatlonseinrichtung, insbesondere ein Ziel-Endgerät, die Identifikationsdaten innerhalb einer Rufaufbau-Signalisierungsnachricht erhält und diese oder gegebenenfalls daraus generierte Ausgabedaten als akustische und/oder visuelle und/oder mechanische Ruf-Signale anstelle eines durch die Ziel-Telekommunikationseinrichtung ausgewählten akustischen Rufzeichens ausgibt. Der Angerufene hört somit nicht ein beliebiges Klingelzeichen oder eine Rufmelodie, die zwar möglicherweise jeweils spezifisch an seinem Ziel-Endgerät einstellbar sind, jedoch keinen Hinweis auf die Quelle des Rufes, also den Anrufer, enthalten. Stattdessen wird der ankommende Ruf durch individuelle und persönliche, dem Anrufer zugeordnete und von diesem ausgewählte Signale signalisiert. Die Signale sind vorzugsweise akustische Signale und enthalten beispielsweise eine Rufmelodie oder Rufsequenz und/oder einen Vibrationsalarm und/oder eine optische Signalisierung, oder beliebige Kombinationen daraus.

Die jeweils von der Netzwerkeinrichtung zu sendenden Identifikationsdaten werden vorteilhafterweise durch eine Anforderungsnachricht ausgelöst, die die Quell-Telekommunikationseinrichtung an die Netzwerkeinrichtung versendet. Die Anforderungsnachricht kann beispielsweise eine die Rufnummer der Quell-Telekommunikationseinrichtung enthaltende Rufanforderungsnachricht sein, die das Quell-Telekommunikationseinrichtung an das Telekommunikationsnetz sendet. Die Netzwerkeinrichtung trägt dann die der Rufnummer zugeordneten Identifikationsdaten in die Rufanforderungsnachricht ein und versendet diese an die Ziel-Telekommunikationseinrichtung.

Es ist somit auch möglich, dass die Identifikationsdaten die Ziel-Telekommunikationseinrichtung dazu anweisen, lediglich eine optische Signalisierung und/oder einen Vibrationsalarm durchzuführen, jedoch keine akustische Signalisierung, so dass der Angerufene auf sehr diskrete Weise auf den ankommenden Ruf aufmerksam gemacht wird.

Jedenfalls können die Identifikationsdaten zur Rufidentifikation in einem digitalen Netzwerk, beispielsweise einem Integrated Services Digital Network, einem Mobilfunknetz oder einem Datennetzwerk, insbesondere dem Internet oder einem sonstigen auf einem Internet-Protokoll basierenden, für Telekommunikation geeigneten Netzwerk, an die Ziel-Telekommunikationseinrichtung übermittelt werden und von diesem zur Signalisierung eines ankommenden Rufes ausgewertet werden, wobei die Identifikationsdaten und somit auch die Qualität der Signalisierung durch den Anrufer gesteuert werden.

Weitere vorteilhafte Ausgestaltungen der Erfindung finden sich in den abhängigen Ansprüchen sowie in der Beschreibung.

Bei der Generierung und Übermittlung der Identifikationsdaten sind verschiedene Varianten denkbar:

Die Identifikationsdaten zur Rufidentifikation können unmittelbar von der Quell-Telekommunikationseinrichtung des Anrufers an die Ziel-Telekommunikationseinrichtung des Angerufenen übermittelt werden, beispielsweise in einer Rufaufbau-Nachricht (engl. Call-Setup-Message).

Die Identifikationsdaten können jeweils im Zusammenhang mit einer aufzubauende Rufverbindung an der Quell-Telekommunikationseinrichtung eingeben werden und/oder in einem Speicher der Quell-Telekommunikationseinrichtung gespeichert sein und beim Aufbau einer Rufverbindung aus dem Speicher abgerufen werden.

Es ist auch möglich, dass eine Netzwerkeinrichtung des Telekommunikationsnetzes die Identifikationsdaten an die Ziel-Telekommunikationseinrichtung versendet. Die Netzwerkeinrichtung könnte beispielsweise eine Vermittlungsstelle und/oder ein sogenannter Dienst-Steuerknoten (engl. Service Control Point = SCP) eines sogenannten Intelligenten Netzes gemäß der Spezifikationen der ITU (International Telecommunication Union) oder ein VolP-Gateway (VolP = Voice over Internet Protocol) sein. Ferner könnte die Netzwerkeinrichtung z.B. auch ein sogenannter Media Gateway Controller, ein sogenannter Gatekeeper, ein sogenannter Call-Server oder ein sogenannter Soft Switch sein.

Es ist auch möglich, dass die Identifikationsdaten oder daraus generierte Ausgabedaten zur Generierung von Ruf-Signalen zumindest teilweise in der Ziel-Telekommunikationseinrichtung abgelegt sind und dass in der Ruf-Signalisie-rungsnachricht angegeben ist, welche Identifikationsdaten bzw. Ausgabedaten zur Ausgabe der Ruf-Signale von der Ziel-Telekommunikationseinrichtung zur Signalisierung des durch die Ruf-Signalisierungsnachricht signalisierten ankommenden Rufes zu verwenden sind.

Die Identifikationsdaten und/oder die Ruf-Signalisierungsnachricht sind vorteilhafterweise dafür vorgesehen, eine jeweilige Qualität der Rufverbindung, insbesondere eine Priorität der Rufverbindung und/oder eine Typkennung von im Rahmen der Rufverbindung zu versendenden Informationen anzugeben. Beispielsweise kann bei einer gewöhnlichen Rufverbindung an der Ziel-Telekommunikationseinrichtung durch die Identifikationsdaten lediglich optische Ruf-Signale hervorgerufen werden, während bei einer dringlichen Rufverbindung zusätzlich auch eine akustische Signalisierung erfolgt.

In einer vorteilhaften Variante der Erfindung sind die Identifikationsdaten segmentiert. Auf diese Weise ist es möglich, zunächst einen ersten Teil der Identifikationsdaten in einer ersten, an die Ziel-Telekommunikationseinrichtung gerichteten Rufaufbau-Signalisierungsnachricht zu versenden und nachfolgend die restlichen Identifikationsdaten in einer oder mehreren Folgenachrichten. Auf diese Weise sind auch komplexe und umfangreiche Identifikationsdaten, beispielsweise längere Rufmelodien oder Sprachnachrichten, ohne Weiteres bei der Rufsignalisierung versendbar.

Die Ziel-Telekommunikationseinrichtung beginnt zweckmäßigerweise bereits mit der Ausgabe der Identifikationsdaten unmittelbar nach Empfang der ersten Rufaufbau-Signalisierungsnachricht, noch bevor sie die kompletten Identifikationsdaten erhalten hat, vorzugsweise noch vor Empfang der Folgenachricht(en). Die Ruf-Signalisierung erfolgt dabei sehr schnell und unverzögert.

In einer besonders einfachen Variante der Erfindung steuert die Ziel-Telekommunikationseinrichtung einen Klingelzeichenerzeuger gemäß der Angaben der Identifikationsdaten an und generiert dabei vorteilhafterweise eine Klingelsequenz. Zweckmäßigerweise jedoch steuert die Ziel-Telekommunikationseinrichtung einen Lautsprecher zur Ausgabe der Identifikationsdaten an, wobei dann auch komplexere Rufmelodien und/oder vom Anrufer zur Rufidentifikation übermittelte Sprachnachrichten ausgebbar sind.

Die Identifikationsdaten können von der Ziel-Telekommunikationseinrichtung auch zur Filterung ankommender Anrufe eingesetzt werden. Die Ziel-Telekommunikationseinrichtung kann beispielsweise einen Anruf eines ersten Anrufers dem Angerufenen gut wahrnehmbar signalisieren, indem sie die in einer zum Aufbau der Rufverbindung dienenden Rufaufbau-Signalisierungsnachricht angegebenen Identifikationsdaten z.B. an einem Lautsprecher ausgibt. Bei einem Anruf eines zweiten Anrufers, dessen Anrufe zumindest temporär nicht angenommen werden sollen, gibt die Ziel-Telekommunikationseinrichtung keine Rufsignale aus und leitet den Anruf beispielsweise auf einen Anrufbeantworter um. Dabei wertet die Ziel-Telekommunikationseinrichtung die in den jeweiligen Rufaufbau-Signalisierungsnachrichten angegebene, den ersten bzw. zweiten Anrufer identifizierenden Identifikationsdaten aus.

Die Ziel-Telekommunikationseinrichtung ist zwar in einer bevorzugten Ausführungsform der Erfindung ein (Ziel-)Endgerät. Es ist auch möglich, dass die Ziel-Telekommunikationseinrichtung eine Vermittlungsstelle, insbesondere eine private Vermittlungsstelle, ist. Die Vermittlungsstelle gibt die jeweiligen, in einer Rufaufbau-Signalisierungsnachricht enthaltenen Identifikationsdaten nicht unmittelbar selbst aus, sondern an einem mit ihr verbundenen Endgerät. Bei dem Endgerät kann es sich auch um ein Endgerät handeln, das die Identifikationsdaten nicht unmittelbar selbst auswerten kann, z.B. um ein analoges Telefon. Die Vermittlungsstelle wandelt die Identifikationsdaten dann in von dem Endgerät ausgebbare Ausgabedaten um, beispielsweise in eine Klingezeichensequenz. Es ist auch möglich, dass die Vermittlungsstelle und das Endgerät über ein proprietäres, gegebenenfalls herstellerspezifisches Protokoll kommunizieren, das lediglich zwischen der Vermittlungsstelle und an diese angeschlossenen, an die Vermittlungsstelle angepassten Endgeräten anwendbar ist.

Im Folgenden werden die Erfindung und ihre Vorteile anhand eines Ausführungsbeispiels unter Zuhilfenahme der Zeichnung dargestellt.
- Figur 1: zeigt eine Anordnung zur Ausführung des erfindungsgemäßen Verfahrens mit einem erfindungsgemäßen Ziel-Telekommunikationseinrichtungen TERA, PB, erfindungsgemäßen Netzwerkeinrichtungen VGW1, VGW2, SCP und SW2, sowie einem erfindungsgemäßen Quell-Endgerät TERB.
- Figur 2: zeigt schematisch ein Ziel-Programm-Modul ZPM.
- Figur 3: zeigt schematisch ein Netzwerkeinrichtungs-Programm-Modul NPM
- Figur 4: zeigt schematisch ein Quell-Programm-Modul QPM.
- Figur 5: zeigt eine Ruf-Signalisierungsnachricht RS1.
- Figur 6: zeigt Ruf-Signalisierungsnachrichten RS11, RS12.
- Figur 7: zeigt eine Ruf-Signalisierungsnachricht RS13.
- Figur 8: zeigt eine Ruf-Signalisierungsnachricht RS14.
- Figur 9: zeigt eine Ruf-Signalisierungsnachricht RS2.

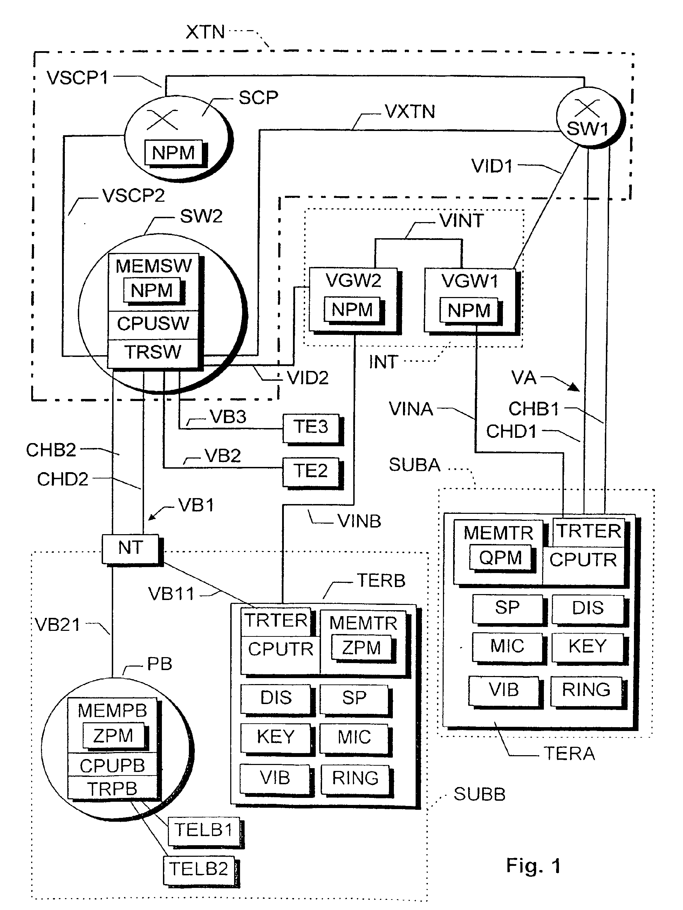

In Figur 1 ist eine beispielhafte Anordnung dargestellt, mit der die Erfindung ausgeführt werden kann. Figur 1 zeigt ein leitungsvermitteltes Telekommunikationsnetz XTN sowie ein Datennetz INT, an die Endgeräte TERA, TERB, TE2, TE3 und über eine private Vermittlungsstelle PB Endgeräte TELB1 und TELB2 angeschlossen sind. Von dem Telekommunikationsnetz XTN und dem Datennetz INT können an die angeschlossenen Endgeräte TERA, TERB, TE2, TE3, TELB1, TELB2 jeweils Rufaufbau-Signalisierungsnachrichten mit Identifikationsdaten zur Rufidentifikation versendet werden. Die Endgeräte TERA, TERB, TE2, TE3, TELB1, TELB2 geben die jeweiligen Identifikationsdaten oder daraus generierte Ausgabedaten als akustische und/oder visuelle und/oder mechanische Ruf-Signale anstelle eines sonstigen Klingelzeichens aus.

Das Telekommunikationsnetz XTN kann beispielsweise ein ISDN-Telekommunikationsnetz (Integrated Services Digital Network) oder ein Mobilfunk-Telekommunikationsnetz, z.B. ein GSM-Netz (GSM = Global System for Mobile Communication), sein. Das Telekommunikationsnetz XTN ist vorliegend als sogenanntes Intelligentes Netz ausgestaltet. Exemplarisch für nicht dargestellte Vermittlungsstellen, Netzwerk-Management-Systeme, Verbindungsleitungen etc. sind von dem Telekommunikationsnetz XTN lediglich Vermittlungsstellen SW1, SW2 sowie ein Dienst-Steuerknoten SCP gezeigt. Die Vermittlungsstellen SW1, SW2 und der Dienst-Steuerknoten SCP sind Ausführungsbeispiele für erfindungsgemäße Netzwerkeinrichtungen. Die Vermittlungsstellen SW1, SW2 kommunizieren über eine Verbindung VXTN miteinander sowie jeweils über eine Verbindung VSCP1 bzw. VSCP2 mit dem Dienst-Steuerknoten SCP. Die Verbindungen VXTN, VSCP1, VSCP2 führen über nicht dargestellte Einrichtungen des Telekommunikationsnetzes XTN. Die Verbindung VXTN steht beispielhaft für eine oder mehrere Verbindungen mit Kanälen für Nutzdaten sowie Kanälen für Signalisierungsdaten. Bei den Verbindungen VSCP1, VSCP2 handelt es sich um Verbindungen, die vorzugsweise über einen Signalisierungskanal oder über ein Signalisierungsnetzwerk geführt werden. Ein solches Signalisierungsnetzwerk ist z.B. das zentrale Zeichengabesystem Nr. 7.

Die Vermittlungsstellen SW1, SW2 sind vorliegend sogenannte Dienst-Vermittlungsstellen oder Service Switching Points (SSP) und der Dienst-Steuerknoten SCP ist ein sogenannter Service Control Point (SCP) eines Intelligenten Netzes. Die grundsätzlichen Funktionen eines Service Switching Points und eines Service Control Points sind durch die ITU (International Telecommunication Union) standardisiert und müssen deshalb an dieser Stelle nicht weiter ausgeführt werden.

An die Vermittlungsstelle SW1 ist das als Quell-Telekommunikationseinrichtung dienende Endgerät TERA über eine Teilnehmeranschlussverbindung VA eines Teilnehmers SUBA angeschlossen. An die Vermittlungsstelle SW2 sind über leitungsgebundene und/oder drahtlose Teilnehmeranschlussverbindungen VB1, VB2, VB3 das Endgerät TERB und die private Vermittlungsstelle PB (engl. PBX = private branch exchange) eines Teilnehmers SUBB sowie ferner die Endgeräte TE3 und TE3 nicht dargestellter Teilnehmer angeschlossen. Die private Vermittlungsstelle PB bedient die Endgeräte TELB1 und TELB2 des Teilnehmers SUBB, der durch einen punktierten Kasten angedeutet ist. Die Endgeräte TE3, TE3, TELB1, TELB2 sind beispielsweise leitungsgebundene oder schnurlose Telefon- oder Faxgeräte, beispielsweise DECT-Endgeräte (DECT = Digital Enhanced Cordless Telecommunications). Die Vermittlungsstelle PB und das Endgerät TERB dienen als erfindungsgemäß ausgestaltete Ziel-Telekommunikationseinrichtungen. Auf Seiten des Teilnehmers SUBB wird die Teilnehmeranschlussverbindung VB1 durch eine Netzabschlusseinrichtung NT terminiert, die vorliegend ein sogenannter ISDN-NT-Adapter ist (NT = Network Terminator). Anstatt der Netzabschlusseinrichtung NT können auch mehrere Netzabschlusseinrichtungen vorgesehen sein, beispielsweise eine einen sogenannten ISDN-Mehrgeräteanschluss terminierende Netzabschlusseinrichtung für das Endgerät TERB sowie eine einen sogenannten Anlagenanschluss terminierende Netzabschlusseinrichtung für die Vermittlungsstelle PB. Diese Netzabschlusseinrichtungen könnten auch in der Netzabschlusseinrichtung NT enthalten sein.

Die private Vermittlungsstelle PB und das Endgerät TERB sind mit der Netzabschlusseinrichtung NT über Verbindungen VB11 und VB21 verbunden, die beispielsweise auf einem sogenannten internen, teilnehmerseitigen So-Bus aufgebaut werden. Die Vermittlungsstellen SW1, SW2 bedienen auch weitere, nicht dargestellte Teilnehmeranschlussverbindungen. Über das Telekommunikationsnetz XTN können Rufverbindungen und/oder Datenverbindungen zwischen den an dieses angeschlossenen Endgeräten oder privaten Vermittlungsstellen aufgebaut werden, z.B. zwischen den Endgeräten TERA und TERB.

Die Teilnehmeranschlussverbindungen VA, VB1 weisen zur Übermittlung von Nutzdaten, beispielsweise von Sprach- und/oder Bilddaten vorgesehene Kanäle CHB1 bzw. CHB2 sowie zu Steuerungszwecken vorgesehene Kanäle CHD1 bzw. CHD2 auf. Unter Anderem werden über die Kanäle CHD1, CHD2 beim Auf- und Abbau von Kommunikationsverbindungen notwendige Signalisierungsnachrichten übermittelt. Die Teilnehmeranschlussverbindungen VA, VB1 sind vorliegend ISDN-Teilnehmeranschlussleitungen und die Kanäle CHD1, CHD2 sogenannte D-Kanäle. Es ist auch möglich, dass die Kanäle CHD1, CHD2 auf einer Mobilfunk-Verbindung vorgesehene Steuerkanäle sind, beispielsweise Steuerkanäle einer UMTS-Funkverbindung (UMTS = Universal Mobile Telecommunications Systems).

Das Datennetzwerk INT kann beispielsweise das Internet, ein sonstiges paketvermitteltes, insbesondere auf einem Internet-Protokoll basierendes, für Telekommunikation geeignetes Netzwerk sein. Von dem Datennetzwerk INT sind lediglich über eine Verbindung VINT miteinander verbundene Gateways VGW1 und VGW2 gezeigt, die exemplarisch für weitere, nicht dargestellte Server, Router, Switches, Übertragungswege etc. des Datennetzwerks INT stehen. Die Gateways VGW1, VGW2 sind vorliegend sogenannte VolP-Gateways (VolP = Voice over Internet-Protocol), über die zwischen dem als Quell-Telekommunikationseinrichtung dienenden Endgerät TERA einerseits und dem als Ziel-Telekommunikationseinrichtung dienenden Endgerät TERB sowie der Vermittlungsstelle PB andererseits Sprach-Kommunikationsverbindungen hergestellt werden können. Dabei werden zwischen den die Teilnehmer SUBA und SUBB bedienenden Vermittlungsstellen SW1, SW2 und den Gateways VGW1, VGW2 Verbindungen VID1 bzw. VID2 aufgebaut.

Die Endgeräte TERA, TERB sind vorliegend nicht nur über das Telekommunikationsnetz XTN mit dem Datennetzwerk INT verbunden, sondern auch über direkte Verbindungen VINA, VINB mit den Gateways VGW1, VGW2. Die Verbindungen VINA, VINB sind beispielsweise Verbindungen auf einem WAN oder LAN (Wide Area Network, Local Area Network).

Es ist auch möglich, dass über die Gateways VGW1, VGW2 sonstige Kommunikationsverbindungen, beispielsweise reine Daten und/oder Bildtelefonie-Verbindungen aufgebaut werden.

Die Gateways VGW1, VGW2 enthalten vorliegend sogenannte Media Gateways, die als Schnittstelleneinrichtung zwischen dem Datennetzwerk INT und dem leitungsvermittelten Telekommunikationsnetz XTN dienen. Media Gateways können sogenannte Mediendaten, z.B. Sprach- und Bilddaten, zwischen einem paketvermittelten Netzwerk, z.B. den Datennetzwerk INT, und einem leitungsvermittelten (circuit-switched) Telekommunikationsnetz, z.B. dem Telekommunikationsnetz XTN, konvertieren. Ferner dienen die Gateways VGW1, VGW2 im Ausführungsbeispiel als sogenannte Signalisierungsgateways, die Signalisierungsdaten, z.B. Ruf-Signalisierungsnachrichten, zwischen einem paketvermittelten Netzwerk und einem leitungsvermittelten Telekommunikationsnetz konvertieren können, bei dem die Signalisierungsdaten z.B. mit dem sogenannten Zentralen Zeichengabesystem Nr.7 übermittelt werden.

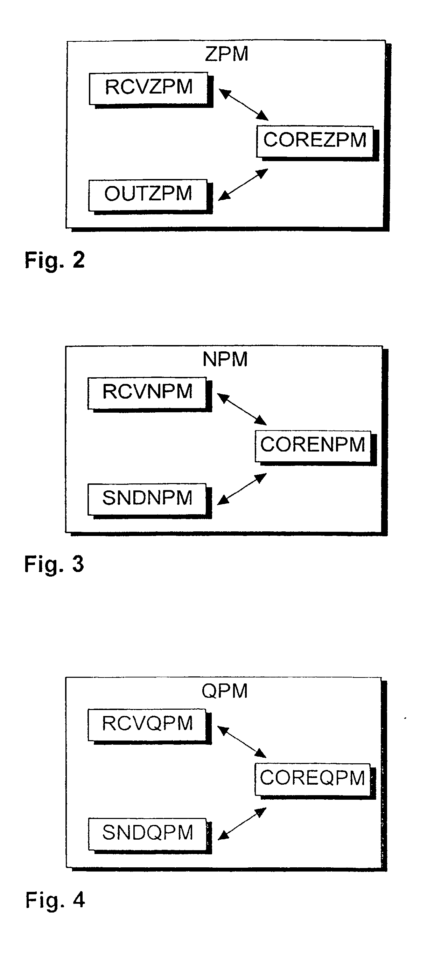

Die Gateways VGW1 und VGW2 weisen nicht dargestellte Verbindungsmittel zum Aufbau von Daten-, Sprach- und/oder Multimediaverbindungen sowie Steuermittel, z.B. Prozessoren, und Speichermittel, z.B. als Arbeitsspeicher dienende RAM-Bausteine und Festplattenlaufwerke, auf und werden jeweils durch Programm-Module unter Kontrolle eines Betriebssystems gesteuert. Vorliegend führen die Steuermittel der Gateways VGW1 und VGW2 jeweils in Figur 3 schematisch gezeigte Netzwerkeinrichtungs-Programm-Module NPM aus, die in deren Speichermitteln gespeichert sind.

Die als Quell- und Ziel-Telekommunikationseinrichtungen dienenden Endgeräte TERA und TERB sind vorliegend jeweils gleichartig aufgebaut und weisen im Wesentlichen gleiche, in Figur 1 schematisch gezeigte Komponenten auf. Im Folgenden werden diese erläutert.

Bei den Endgeräten TERA, TERB handelt es sich beispielsweise um Personalcomputer, um Mobilfunk-Endgeräte, um ISDN-Endgeräte oder um sonstige digitale Endgeräte. Die Endgeräte TERA, TERB weisen als Sende- und Empfangsmittel dienende Verbindungsmittel TRTER auf, bei denen es sich beispielsweise um Modems, ISDN-Adapter oder Netzwerkkarten handelt. Mit den Verbindungsmitteln TRTER können die Endgeräte TERA, TERB Verbindungen zu dem Telekommunikationsnetz XTN aufbauen. Weiterhin weisen die Endgeräte TERA, TERB Steuermittel CPUTR sowie Speichermittel MEMTR auf. Die Steuermittel CPUTR sind beispielsweise einzelne Prozessoren oder Prozessoranordnungen, mit denen Programm-Code von Programm-Modulen ausgeführt werden kann, die in den Speichermitteln MEMTR gespeichert sind. Bei den Speichermitteln MEMTR handelt es sich z.B. um Festplatten oder um als Arbeitsspeicher dienende RAM-Bausteine. Weiterhin weisen die Endgeräte TERA; TERB Anzeigemittel DIS sowie Eingabemittel KEY auf. Die Anzeigemittel DIS enthalten beispielsweise eine LED-Anordnung, einen Bildschirm oder ein LCD-Display (Liquid Cristal Display). Die Eingabemittel KEY können eine Tastatur oder eine Maus umfassen. Weiterhin weisen die Endgeräte TERA, TERB Lautsprecher SP sowie Mikrofone MIC auf, mit denen Sprachaus- bzw. Spracheingabe möglich sind. Über den Lautsprecher SP sowie einen Klingelzeichengeber RING können die Endgeräte TERA, TERB akustische, über die Anzeigemittel DIS visuelle Ruf-Signale bei einem ankommenden Ruf ausgeben. Ferner können die Endgeräte TERA, TERB über einen Vibrationsgeber VIB mechanische Ruf-Signale ausgeben, z.B. einen sogenannten Vibrationsalarm. Die Komponenten der Endgeräte TERA, TERB sind durch nicht gezeigte Verbindungen untereinander verbunden.

Im Quell-Endgerät TERA ist ein in Figur 4 schematisch gezeigtes Quell-Programm-Modul QPM gespeichert, im Ziel-Endgerät TERB ein in Figur 2 schematisch gezeigtes Ziel-Programm-Modul ZPM. Der Programmcode der Module QPM, ZPM wird durch die Steuermittel CPUTR ausgeführt.

Von der Vermittlungsstelle SW2 sind beispielhaft einige wesentliche Komponenten gezeigt, nämlich ein Verbindungsmittel TRSW sowie ein Steuermittel CPUSW und ein Speichermittel MEMSW. Mit dem Verbindungsmittel TRSW kann die Vermittlungsstelle SW2 einerseits Daten- und Sprachverbindungen zu Teilnehmern oder anderen Vermittlungsstellen, z.B. die Verbindungen VB1 und VXTN, aufbauen. Andererseits kann das Verbindungsmittel TRSW auch Signalisierungsverbindungen, wie z.B. die Verbindung VSCP2 zu dem Dienst-Steuerknoten SCP aufbauen. Bei dem Steuermittel CPUSW handelt es sich um einen Prozessor oder um eine Gruppe von Prozessoren, die Programmcode von Programm-Modulen, beispielsweise von dem in Figur 3 schematisch gezeigten Netzwerkeinrichtungs-Programm-Modul NPM, die in dem Speichermittel MEMSW gespeichert sind. Das Steuermittel CPUSW steuert mit Hilfe der Programm-Module unter Kontrolle eines Betriebssystems die Funktionen der Vermittlungsstelle SW2 und nimmt dabei beispielsweise auf die Funktionen der als Sende- und Empfangsmittel dienenden Verbindungsmittel TRSW Einfluss. Das Verbindungsmittel TRSW, das Steuermittel CPUSW und das Speichermittel MEMSW sind durch in Figur 1 nicht dargestellte Verbindungen untereinander verbunden. Weiterhin kann die Vermittlungsstelle SW1 weitere Baugruppen aufweisen, z.B. ein Koppelnetzwerk oder eine Schnittstelle zu einem Network Management System.

Die Vermittlungsstelle SW1 kann gleichartig aufgebaut sein wie die Vermittlungsstelle SW2 und wie diese die später noch beschriebenen erfindungsgemäßen Funktionen leisten. Die Vermittlungsstelle SW1 kann jedoch auch eine konventionelle, bekannte Vermittlungsstelle sein.

Die private Vermittlungsstelle PB des Teilnehmers SUBB ist im Wesentlichen gleichartig aufgebaut wie die Vermittlungsstelle SW2. Daher sollen deren Komponenten nicht im Einzelnen erläutert werden. Ein Steuermittel CPUPB entspricht dabei dem Steuermittel CPUSW, Speichermittel MEMPB den Speichermitteln MEMSW und als Sende- und Empfangsmittel dienende Verbindungsmittel TRPB den Verbindungsmitteln TRSW. Das Steuermittel CPUPB steuert mit Hilfe von Programm-Modulen, beispielsweise von dem in Figur 2 schematisch dargestellten Ziel-Programm-Modul ZPM, unter Kontrolle eines Betriebssystems die Funktionen der Vermittlungsstelle PB und nimmt dabei beispielsweise auf die Funktionen der Verbindungsmittel TRPB Einfluss. Im Unterschied zu der Vermittlungsstelle SW2 ist in der als Ziel-Telekommunikationseinrichtung dienenden Ziel-Vermittlungsstelle PB das in Figur 2 schematisch gezeigte Ziel-Programm-Modul ZPM gespeichert. Der Programmcode des Ziel-Programm-Moduls ZPM wird durch die Steuermittel CPUPB ausgeführt.

Der Dienst-Steuerknoten SCP weist nicht dargestellte Verbindungsmittel zum Aufbau von Daten- und/oder Sprachverbindungen sowie Steuermittel, z.B. Prozessoren, und Speichermittel, z.B. als Arbeitsspeicher dienende RAM-Bausteine und Festplattenlaufwerke, auf und wird durch Programm-Module unter Kontrolle eines Betriebssystems gesteuert. Vorliegend führen die Steuermittel des Dienst-Steuerknotens SCP das in Figur 3 schematisch gezeigte Netzwerkeinrichtungs-Programm-Modul NPM aus, das in seinen Speichermitteln gespeichert ist.

Das Ziel-Programm-Modul ZPM, das Quell-Programm-Modul QPM und das Netzwerkeinrichtungs-Programm-Modul NPM sind z.B. in einer Programmiersprache, beispielsweise "C", "C++", Java oder dergleichen, erstellt und werden anschließend durch einen Kompiler oder einen Interpreter in Programmcode übersetzt, der durch die Steuermittel CPUTR, CPUPB bzw. CPUSW ausgeführt werden kann. Die Module ZPM, QPM, NPM sind lediglich schematisch aus funktionaler Sicht dargestellt und können jeweils auch individuell anders ausgebaut sein. Die Module ZPM, QPM, NPM weisen jeweils einen zentralen Steuerteil auf, der mit COREZPM, COREQPM bzw. CORENPM bezeichnet ist und der im Folgenden näher beschriebene Funktionen bzw. Teilprogramme aufruft.

Die zentralen Steuerteile COREZPM, CORENPM der Module ZPM, NPM steuern die jeweils als Empfangsmittel dienende Empfangsfunktionen RCVZPM bzw. RCVNPM. Das Ziel-Programm-Modul ZPM weist eine als Ausgabemittel dienende Ausgabefunktion OUTZPM und das Netzwerkeinrichtungs-Programm-Modul NPM eine als Sendemittel dienende Sendefunktion SNDNPM auf.

Die Empfangsfunktion RCVZPM ist zum Empfangen von beim Aufbau einer Rufverbindung zu den Ziel-Telekommunikationseinrichtungen TERB, PB innerhalb einer Rufaufbau-Signalisierungsnachricht versendeten Identifikationsdaten zur Identifikation des als Anrufer auftretenden Teilnehmers SUBA ausgestaltet. Die Rufaufbau-Signalisierungsnachricht wird über die Verbindungsmittel der TRTER, TRPB des Ziel-Endgeräts TERB bzw. der Ziel-Vermittlungsstelle PB empfangen. Die Ausgabefunktion OUTZPM ist zum Ausgeben der Identifikationsdaten oder daraus generierter Ausgabedaten an dem Ziel-Endgerät TERB sowie an den im Gebrauchszustand mit der als Ziel-Telekommunikationseinrichtung dienenden privaten Vermittlungsstelle PB verbundenen Endgeräten TELB1, TELB2 als akustische und/oder visuelle und/oder mechanische Ruf-Signale ausgestaltet. Im Ziel-Endgerät TERB steuert die Ausgabefunktion OUTZPM dabei den Lautsprecher SP sowie die Anzeigemittel DIS an. In der Ziel-Vermittlungsstelle PB übergibt die Ausgabefunktion OUTZPM aus den Identifikationsdaten generierte Ausgabedaten an die Verbindungsmittel TRPB zum Versenden an die Endgeräte TELB1, TELB2.

Die Empfangsfunktion RCVNPM ist zum Empfangen einer von dem als Quell-Telekommunikationseinrichtung dienenden Quell-Endgerät TERA gesendeten Anforderungsnachricht unter Mitwirkung der Verbindungsmittel TRSW vorgesehen, beispielsweise zum Empfangen einer Anforderungsnachricht zum Aufbau einer Rufverbindung. Mit der Anforderungsnachricht wird die Netzwerkeinrichtung zum Übermitteln von Identifikationsdaten zur Identifikation des Anrufers SUBA an die Ziel-Telekommunikationseinrichtungen PB, TERB aufgefordert. Die Sendefunktion SNDNPM ist zum Senden der Identifikationsdaten innerhalb einer an die Ziel-Telekommunikationseinrichtung gerichteten Rufaufbau-Signalisierungsnachricht PB, TERB ausgestaltet. Die Sendefunktion SNDNPM übergibt dazu die Rufaufbau-Signalisierungsnachricht zum Versenden an die Verbindungsmittel TRSW. Die Ziel-Telekommunikationseinrichtungen PB, TERB können dann die Identifikationsdaten oder daraus generierte Ausgabedaten als akustische und/oder visuelle und/oder mechanische Ruf-Signale anstelle eines durch sie selbst ausgewählten akustischen Rufzeichens ausgeben.

Der zentrale Steuerteil COREQPM des Quell-Programm-Moduls QPM steuert eine als Erfassungsmittel dienende Erfassungsfunktion RVCQPM zum Erfassen von Identifikationsdaten zur Rufidentifikation, die z.B. der als Anrufer agierende Teilnehmer SUBA an der Quell-Telekommunikationseinrichtung TERA eingibt. Dabei empfängt die Erfassungsfunktion RVCQPM beispielsweise über das Mikrofon MIC und/oder über die Eingabemittel KEY eingegebene Anweisungen des Teilnehmers SUBA zur Gestaltung der Identifikationsdaten. Der zentrale Steuerteil COREQPM steuert ferner eine als Sendemittel dienende Sendefunktion SNDQPM. Die Sendefunktion SNDQPM sendet mittels der Verbindungsmittel TRTER die Identifikationsdaten innerhalb einer Rufaufbau-Signalisierungsnachricht an die Ziel-Telekommunikationseinrichtungen TERB, PB, so dass diese anhand der Identifikationsdaten akustische und/oder visuelle und/oder mechanische Ruf-Signale ausgeben können.

Die jeweiligen Funktionen RCVZPM, OUTZPM; RCVNPM, SNDNPM; RCVQPM, SNDQPM der Module ZPM, NPM, QPM können lediglich zur Kommunikation mit den ihnen jeweils zugeordneten zentralen Steuerteilen COREZPM, CORENPM bzw. COREQPM ausgestaltet sein, als auch jeweils zu einer unmittelbaren Kommunikation und/oder zu einem unmittelbaren gegenseitigen Funktionsaufruf untereinander, wobei die zentralen Steuerteile COREZPM, CORENPM bzw. COREQPM gegebenenfalls nicht unbedingt erforderlich sind.

Bei der Ausführung des erfindungsgemäßen Verfahrens sind diverse Varianten möglich, von denen im Folgenden einige erläutert werden:

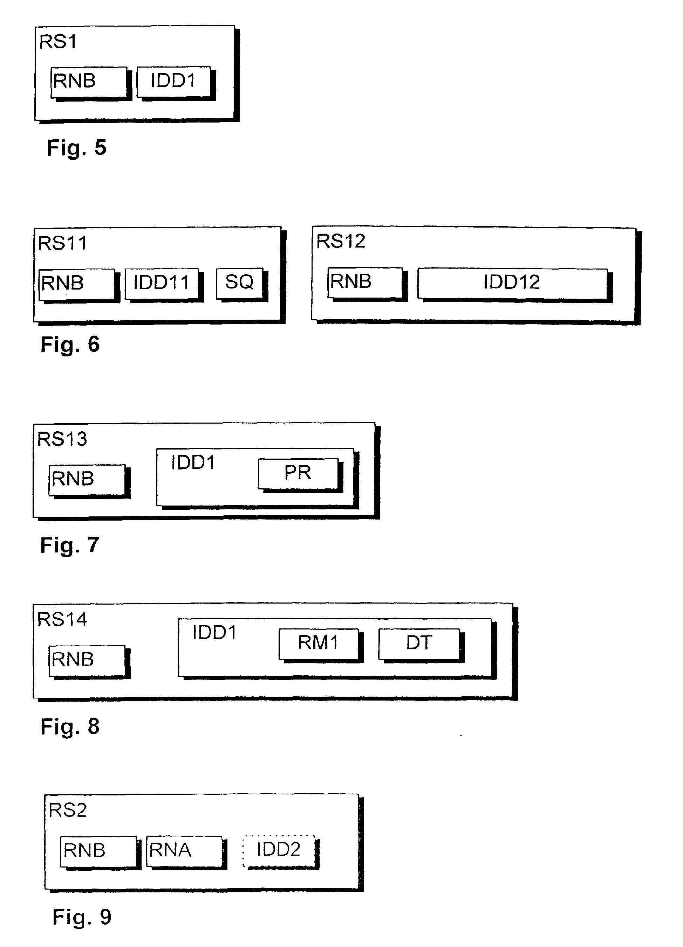

Von dem Endgerät TERA soll eine Verbindung über das Telekommunikationsnetz XTN zu dem Endgerät TERB aufgebaut werden. Dazu wird dessen Rufnummer RNB über die Eingabemittel KEY oder z.B. über Spracheingabe an dem Mikrofon MIC an dem Endgerät TERA eingegeben. Das Endgerät TERA sendet die Rufnummer RNB im Rahmen einer in Figur 5 schematisch gezeigten Ruf-Signalisierungsnachricht RS1, die z.B. eine ISDN-Setup-Nachricht ist, über den Kanal CHD1 an die Vermittlungsstelle SW1. Erfolgt die Eingabe der Rufnummer RNB am Endgerät TERA z.B. im Rahmen einer sogenannten Ruf-Vorbereitung, bei der beim Wählen der Hörer noch aufgelegt ist, oder stammt die Rufnummer RNB aus einem Rufnummernspeicher des Endgeräts TERA, sendet dieses die vollständige Rufnummer RNB des Teilnehmers SUBB in einer Ruf-Signalisierungsnachricht, mit der bereits die gewünschte Rufverbindung aufgebaut werden kann. Ansonsten wartet die Vermittlungsstelle SW1 solange, bis das Endgerät TERA die Ziffern der vollständige Rufnummer an die Vermittlungsstelle SW1 gesendet hat. Beim ISDN-Protokoll sendet das Endgerät TERA die ergänzenden Ziffern einer Rufnummer in sogenannten INFO-Nachrichten.

Zusätzlich zu der Rufnummer RNB fügt das Endgerät TERA Identifikationsdaten IDD1 zur Rufidentifikation in die Ruf-Signalisierungsnachricht RS1 ein. Bei der ISDN-Setup-Nachricht kann dazu beispielsweise der für User-to-User-Signalisierung vorgesehene Abschnitt verwendet werden.

Es ist auch möglich, dass die an die Vermittlungsstelle SW1 gesendete Ruf-Signalisierungsnachricht RS1 die Identifikationsdaten IDD1 nicht enthält und dass die Vermittlungsstelle SW1 das Endgerät TERA dazu auffordert, die Identifikationsdaten IDD1 anzugeben, beispielsweise aus seinem Speicher MEMTR abzurufen oder bei dem Teilnehmer SUBA abzufragen.

Die Identifikationsdaten IDD1 enthalten beispielsweise Informationen zur Erzeugung akustischer und/oder visueller Ruf-Signale, z.B. einer Rufmelodie oder einer Klingelsequenz und/oder den Namen des Teilnehmers SUBA. Dabei sind beliebige Kombinationen möglich, z.B. kann eine Klingelsequenz und eine Textnachricht über die Dringlichkeit oder den Zweck der aufzubauenden Rufverbindung in den Identifikationsdaten IDD1 enthalten sein. Es ist auch möglich, dass in den Identifikationsdaten IDD1 der Namen des Teilnehmers SUBA enthalten ist sowie eine Anweisung an das Endgerät TERB, diesen Namen in Sprache umzuwandeln und als Ruf-Signal auszugeben. Ferner kann in den Identifikationsdaten IDD1 angegeben sein, keine akustischen, sondern nur optische Signale, z.B. über die Anzeigemittel DIS, und/oder nur mechanische Signale, z.B. einen Vibrationsalarm über den Vibrationsgeber VIB, zur Ruf-Signalisierung auszugeben. Eine Rufmelodie kann beispielsweise im sogenannten "Capella"-Format (Dateierweiterung "*.cap") oder im MP3-Format codiert sein (MP3 ist der Audio Layer 3 des zur Videodatenkompression verwendeten MPEG-1-Formats; MPEG = Moving Picture Experts Group).

Die Ruf-Signalisierungsnachricht mit den Identifikationsdaten wird von der Vermittlungsstelle SW1 über die Verbindung VXTN an die Vermittlungsstelle SW2 gesendet, welche die Ruf-Signalisierungsnachricht über den Kanal CHD2 an das Endgerät TERB sowie an die ebenfalls an die Teilnehmeranschlussleitung VB1, VB21 angeschlossene Vermittlungsstelle PB weiterleitet.

Bei einer Ruf-Signalisierungsnachricht, in der keine Identifikationsdaten vorhanden sind, würden das Endgerät TERB und die Vermittlungsstelle über die Endgeräte TELB1, TELB2 nunmehr Standard-Klingelzeichen ausgeben, um den ankommenden Ruf zu signalisieren. Das Endgerät TERB würde dazu beispielsweise den Lautsprecher SP oder den Klingelzeichengeber RING aktivieren. Die Vermittlungsstelle PB würde Ruf-Signale an die Endgeräte TELB1, TELB2 senden, beispielsweise deren nicht dargestellte Klingeln für von extern ankommende Anrufe vorgesehenen Rhythmus ansteuern.

Vorliegend enthalten die Identifikationsdaten IDD1 jedoch individuelle, zur Identifizierung des Teilnehmers SUBA geeignete Informationen, so dass beispielsweise das Endgerät TERB die Identifikationsdaten IDD1 aus der Ruf-Signalisierungsnachricht RS1 ausliest und eine von dem Teilnehmer SUBA in den Identifikationsdaten IDD1 vorgegebene Rufmelodie an dem Lautsprecher SP ausgibt.

Die Vermittlungsstelle PB sendet die Ruf-Signale an die Endgeräte TELB1, TELB2 nicht im üblichen Klingel-Rhythmus für von extern ankommende Anrufe, sondern in einem für den Teilnehmer SUBA typischen und durch die Identifikationsdaten IDD1 vorgegebenen Klingel-Rhythmus, den sie als Ausgabedaten aus den Identifikationsdaten IDD1 generiert.

Es ist auch möglich, dass die Endgeräte TELB1, TELB2 mobile DECT-Endgeräte sind und die Vermittlungsstelle PB eine diesen zugeordnete DECT-Basisstation und -Vermittlungsstelle. Die Vermittlungsstelle PB entnimmt beispielsweise den Identifikationsdaten IDD1, dass die Endgeräte TELB1, TELB2 lediglich einen Vibrationsalarm zur Rufssignalisierung ausgeben sollen. Daher bildet die Vermittlungsstelle PB aus den Identifikationsdaten IDD1 als Ausgabedaten Nachrichten, in denen die Endgeräte TELB1, TELB2 zur Ausgabe eines Vibrationsalarms als Ruf-Signalisierung angewiesen werden. Der Vibrationsalarm kann zudem in einem durch die Identifikationsdaten IDD1 vorgegebenen Rhythmus von den Endgeräten TELB1, TELB2 ausgegeben werden.

Wenn das Endgerät TERB oder eines der Endgeräte TELB1, TELB2 die Rufverbindung annimmt, sendet das jeweilige Endgerät eine Annahmenachricht an die Vermittlungsstelle SW2, beim ISDN-Protokoll z.B. eine sogenannte CONNECT-Nachricht. Das Telekommunikationsnetz XTN baut dann zwischen dem jeweiligen Endgerät TERA, TELB1, TELB2 des Teilnehmers SUBB und dem Endgerät TERA die durch die Ruf-Signalisierungsnachricht RS1 angeforderte Kommunikationsverbindung in an sich bekannter Weise auf. Die Kommunikationsverbindung wird vorliegend auf den für Nutzdaten vorgesehenen Kanälen CHB1, CHB2 aufgebaut.

Der Teilnehmer SUBA kann die Identifikationsdaten jeweils individuell beim Aufbau einer jeweiligen Rufverbindung an dem Endgerät TERA über die Eingabemittel KEY und/oder das Mikrofon MIC eingeben. Es ist auch möglich, dass das Endgerät TERA die Identifikationsdaten automatisch in die Ruf-Signalisierungsnachricht einfügt. Die Identifikationsdaten könnten dazu beispielsweise in deren Speicher MEMTR abgelegt sein und z.B. von dem Quell-Programm-Modul QPM jeweils beim Aufbau einer Rufverbindung abgerufen werden. Dabei können für jede von dem Endgerät TERA ausgehende Rufverbindung dieselben Identifikationsdaten vorgesehen sein. Es ist auch möglich, dass die Identifikationsdaten zielspezifisch in dem Speichermittel MEMTR abgelegt sind, z.B. in einer Tabelle mit einer Zuordnung Identifikationsdaten-zu-Zieladresse der jeweiligen Kommunikationsverbindung. Beispielsweise können für eine Rufverbindung zu dem Endgerät TERB erste, z.B. eine erste Rufmelodie repräsentierende Identifikationsdaten vorgesehen sein und zu dem Endgerät TE3 zweite, z.B. eine zweite Rufmelodie repräsentierende Identifikationsdaten.

In einer weiteren Variante wird eine Kommunikationsverbindung nicht über das Telekommunikationsnetz XTN, sondern über das Datennetzwerk INT aufgebaut. Das Endgerät TERA baut dabei zunächst eine Verbindung über das Telekommunikationsnetz XTN zu dem Datennetzwerk INT auf, vorliegend eine Verbindung über die Vermittlungsstelle SW1 und die Verbindungen CHB1, VID1, zu dem Gateway VGW1. Es ist auch möglich, dass zwischen Gateway VGW1 und dem Endgerät TERA eine direkte, nicht über das Telekommunikationsnetz XTN führende Verbindung VINA aufgebaut wird, die beispielsweise über eine Funkstrecke, über ein Energiekabel als sogenannte Powerline-Verbindung oder über ein LAN führt.

Das Endgerät TERA sendet an das Gateway VGW1 eine Ruf-Signalisierungsnachricht, die als Anforderungsnachricht zum Aufbau einer VolP-Kommunikationsverbindung über das Datennetzwerk INT zu dem Endgerät TERB dient.

Für den Aufbau und die Kontrolle der VolP-Kommunikationsverbindung, also auch für die besagte Ruf-Signalisierungsnachricht können diverse Steuer-Protokolle vorgesehen sein, z.B. das mit MGCP abgekürzte Media Gateway Control Protocol oder das mit MEGACOP abgekürzte Media Gateway Control Protocol, die beide durch die IETF (= Internet Engineering Task Force) standardisiert sind. Zum Verbindungsaufbau und/oder zur Verbindungssteuerung können einer oder mehrere sogenannte Call Agents (nicht dargestellt) in dem Datennetzwerk INT vorgesehen sein. Die Call Agents können auch in den Gateways VGW1, VGW2 vorgesehen sein.

Beim MEGACOP sendet das Endgerät TERA an das Gateway VGW1 z.B. ein sogenanntes ADD-Command, in dem die Identifikationsdaten zur Rufidentifikation angeben sind. Das ADD-Command oder eine daraus generierte Nachricht wird von dem Datennetzwerk INT an die Ziel-Telekommunikationseinrichtungen durchgereicht, vorliegend an das Endgerät TERB und/oder private die Vermittlungsstelle PB. Diese geben dann in Abhängigkeit der Identifikationsdaten in der oben beschriebenen Weise Ruf-Signale aus. Das ADD-Command ist dabei eine Aktion auf ein Objekt, das z.B. das Endgerät TERB als solches oder das Ziel-Programm-Modul ZPM sein kann. Es ist auch möglich, dass das ADD-Command das erforderliche Objekt generiert, falls dieses nicht vorhanden ist. Beispielsweise könnte das Ziel-Programm-Modul ZPM oder ein sonstiges, die Identifikationsdaten in akustische und/oder visuelle und/oder mechanische Ruf-Signale umsetzendes Objekt durch das ADD-Command generiert werden.

Beim MGCP sendet das Endgerät TERA an das Gateway VGW1 und/oder einen nicht dargestellten Call Agent (einen sogenannten Gatekeeper) z.B. ein sogenanntes NOTIFY-Command, in dem die jeweiligen Identifikationsdaten zur Rufidentifikation angeben sind. In dem Datennetzwerk INT, beispielsweise in den Gateways VGW1 und/oder VGW2 oder in einer sonstigen Netzwerkeinrichtungen sind sogenannte "Call Agents" instanziiert, die das NOTIFY-Command empfangen und als sogenannte CRCX-Nachricht untereinander übermitteln können. Vorliegend bilden die Gateways VGW1, VGW2 jeweils Instanzen von Call Agents, auch Gatekeeper genannt. Das Gateway VGW1 empfängt von dem Endgerät TERA das NOTIFY-Command mit den Ruf-Identifikationsdaten und leitet es als CRCX-Nachricht über die Verbindung VINT an das Gateway VGW2 weiter. Dieses bildet aus der die Identifikationsdaten enthaltenden CRCX-Nachricht wieder ein die Identifikationsdaten enthaltendes NOTIFY-Command und sendet dieses an das Endgerät TERB und/oder die Vermittlungsstelle PB. Letztere kann als VoiP-Schnittstelleneinrichtung oder -Gateway ausgebildet sein, die VolP-Nutzdatennachrichten und/oder VolP-Signalisierungsnachrichten z.B. in analoge Signale oder DECT-Nachrichten für die Endgeräte TELB1, TELB2 umwandeln kann und umgekehrt, so dass diese nicht unbedingt "VolP-fähig" sein müssen.

Die Identifikationsdaten zur Rufidentifikation müssen allerdings nicht unbedingt von einer Quell-Telekommunikationseinrichtung versendet werden, sondern können auch von einer Netzwerkeinrichtung, z.B. der Vermittlungsstelle SW2 oder dem Dienst-Steuerknoten SCP, den Gateways VGW1, VGW2 oder sonstigen Call Agents, Gatekeepern oder dergleichen in eine jeweilige Ruf-Signalisierungsnachricht eingefügt werden. Ferner kann eine solche Netzwerkeinrichtung von einer Quell-Telekommunikationseinrichtung gesendete Identifikationsdaten durch weitere, zusätzliche Identifikationsdaten ergänzen.

Beispielsweise kann eine in Figur 9 gezeigte Ruf-Signalisierungsnachricht RS2 zunächst ohne die Identifikationsdaten IDD2 vom Endgerät TERA an die Vermittlungsstelle SW1 gesendet und von dieser an die Vermittlungsstelle SW2 weitegeleitet werden. Die Ruf-Signalisierungsnachricht RS2 bildet eine an das Telekommunikationsnetz XTN gerichtete Anforderung zum Senden von Identifikationsdaten. Die Vermittlungsstelle SW2 ergänzt dann, z.B. unter Steuerung des Netzwerkeinrichtungs-Programm-Moduls NPM, die Identifikationsdaten IDD2, bevor sie die Ruf-Signalisierungsnachricht RS2 an das Endgerät TERB und/oder die Vermittlungsstelle PB sendet. Die Identifikationsdaten IDD2 ermittelt die Vermittlungsstelle SW2 beispielsweise anhand einer in der Ruf-Signalisierungsnachricht RS1 angegebenen Rufnummer RNA des Teilnehmers SUBA. Dazu ist beispielsweise eine Zuordnung Quell-Rufnummer-zu-ldentifikationsdaten in der Vermittlungsstelle SW2 abgelegt. Eine solche Zuordnung kann z.B. als Teilnehmerprofil des Teilnehmers SUBA beispielsweise durch ein nicht dargestelltes Netzwerk-Management-System in die Vermittlungsstelle SW2 geladen und/oder durch den Teilnehmer SUBA konfiguriert werden.

In einer Variante der obigen Ausführung sind die Identifikationsdaten IDD2 nicht in der Vermittlungsstelle SW2, sondern in dem Dienst-Steuerknoten SCP abgelegt. Bei Erhalt der Ruf-Signalisierungsnachricht RS2 fragt die Vermittlungsstelle SW2 die erforderlichen Identifikationsdaten IDD2 bei dem Dienst-Steuerknoten SCP ab und sendet diesem dazu beispielsweise mittels einer INAP-Nachricht (Intelligent Network Application Part) eine Abfrage, in der die Rufnummer RNA enthalten ist. Der Dienst-Steuerknoten SCP übermittelt dann beispielsweise unter Steuerung des Netzwerkeinrichtungs-Programm-Moduls NPM die notwendigen, z.B. in Konfigurationsdaten des Dienst-Steuerknotens SCP enthaltenen Identifikationsdaten IDD2, welche die Vermittlungsstelle SW2 dann in die Ruf-Signalisierungsnachricht RS2 einfügt.

Die Identifikationsdaten IDD2 könnten jedoch auch bereits durch die Vermittlungsstelle SW1 in die Ruf-Signalisierungsnachricht RS2 eingefügt werden, in der dazu beispielsweise ein nicht dargestelltes Netzwerkeinrichtungs-Programm-Modul NPM installiert ist. Ferner könnte die Vermittlungsstelle SW1 die Identifikationsdaten IDD2 auch bei dem Dienst-Steuerknoten SCP in der oben erläuterten Weise abfragen.

Gleiches gilt auch für die Gateways VGW1, VGW2, die jeweils Identifikationsdaten in Ruf-Signalisierungsnachrichten mittels ihrer Netzwerkeinrichtungs-Programm-Module NPM einfügen können.

Es ist auch möglich, dass die Gateways VGW1, VGW2 und/oder die Vermittlungsstellen SW1, SW2 bei von den Endgeräten TERB, TE3, TE3 gesendeten, an den Teilnehmer SUBA gerichteten Ruf-Signalisierungsnachrichten Identifikationsdaten einfügen und dazu beispielsweise die jeweils in den jeweiligen Ruf-Signalisierungsnachrichten angegebenen Quelladressen, z.B. deren Rufnummern oder Internet-Protokoll-Adressen, auswerten.

In einer komfortablen Variante stellen die Vermittlungsstellen SW1, SW2 und/oder die Gateways VGW1, VGW2 und/oder der Dienst-Steuerknoten SCP den Teilnehmern SUBA, SUBB eine Bedienoberfläche zur Einstellung individueller Konfigurationen von Ruf-Identifikationsdaten bereit. Dazu wird beispielsweise eine Verbindung zwischen dem Endgerät TERA und dem Gateway VGW1 oder der Vermittlungsstelle SW1 hergestellt, gegebenenfalls unter Einbeziehung des Datennetzwerkes INT. Das Gateway VGW1 bzw. die Vermittlungsstelle SW1 senden dann Daten, die beispielsweise mit einem sogenannten Browser, z.B. einem Netscape Navigator oder einem Microsoft Explorer, von dem Endgerät TERA anzeigbar sind. Dabei wird beispielsweise eine Maske angezeigt, in die der Teilnehmer SUBA jeweils eine Zieladresse eines Kommunikationspartners, z.B. die Rufnummer oder die Internet-Adresse des Teilnehmers SUBB, sowie die für den jeweiligen Kommunikationspartner gewünschte optische und/oder akustische Signalisierung. Es ist auch möglich, dass der Teilnehmer SUBA für alle Rufverbindungen, die von seinem Endgerät TERA ausgehen, stets dieselbe Rufidentifikation konfiguriert. Die Identifikationsdaten sind dann der Quelladresse der Rufverbindungen zugeordnet, z.B. der Rufnummer des Endgeräts TERA. In einer einfachen Variante klingelt dann jedes vom Endgerät TERA aus angewählte Ziel-Telefon mit der gleichen Rufmelodie oder der gleichen Klingelsequenz. Die vom Teilnehmer SUBA in die Maske eingetragenen Daten werden dann von dem Endgerät TERA an das Gateway VGW1 bzw. die Vermittlungsstelle SW1 versandt und von diesen gespeichert.

Es ist auch möglich, dass die im Rahmen einer Ruf-Signalisierung zu sendenden Identifikationsdaten aufgrund ihres Umfanges nicht komplett in einer einzigen Ruf-Signalisierungsnachricht gesendet werden können. Die Quell-Telekommunikationseinrichtung oder eine die Identifikationsdaten in die Ruf-Signalisierung einbringende Netzwerkeinrichtung segmentiert die Identifikationsdaten und sendet diese in mehreren Ruf-Signalisierungsnachrichten oder in einer oder mehreren Folgenachrichten, die an eine erste Ruf-Signalisierungsnachricht anschließen. Beispielsweise sendet das Endgerät TERA erste Identifikationsdaten IDD11 in einer in Figur 6 gezeigten Ruf-Signalisierungsnachricht RS11 an das Endgerät TERB und anschließend weitere Identifikationsdaten IDD12 in einer Ruf-Signalisierungsnachricht RS12. In der Ruf-Signalisierungsnachricht RS11 ist ein Kennzeichner SQ enthalten, der auf die noch folgende Ruf-Signalisierungsnachricht RS12 hinweist. Beim ISDN-Protokoll sind die Ruf-Signalisierungsnachrichten RS11, RS12 z.B. mit dem Message-Typ "SEGMent" versehen. Es ist auch möglich, dass anstatt der Ruf-Signalisierungsnachricht RS12 oder im Anschluss an diese eine Identifikationsdaten enthaltende User-to-User-Signalisierungsnachricht gesendet wird.

Bereits anhand der Ruf-Signalisierungsnachricht RS11 kann das Telekommunikationsnetz XTN eine Kommunikationsverbindung zwischen den Endgeräten TERA, TERB aufbauen. Ferner kann das Endgerät TERB anhand der Identifikationsdaten IDD11 bereits unmittelbar nach Empfang der Ruf-Signalisierungsnachricht RS11 Ruf-Signale, z.B. eine Klingelmelodie, ausgeben. Wenn die Identifikationsdaten IDD12 nach der Ausgabe der Identifikationsdaten IDD11 noch nicht eingetroffen sind, kann das Endgerät TERB z.B. die Ausgabe der Identifikationsdaten IDD11 wiederholen. Es ist prinzipiell auch möglich, dass das Endgerät TERB jeweils das Eintreffen kompletter Identifikationsdaten abwartet, vorliegend z.B. der Ruf-Signalisierungsnachrichten RS11, RS12, bevor es mit der Ausgabe der durch die Identifikationsdaten IDD11, IDD12 definierten Ruf-Signale beginnt.

Es ist auch möglich, dass das Endgerät TERA als Quell-Telekommunikationseinrichtung die Ruf-Signalisierungsnachricht RS11 sendet und eine Netzwerkeinrichtung, z.B. die Vermittlungsstelle SW2, anschließend die Ruf-Signalisierungsnachricht RS12.

Die in Figur 7 gezeigte Ruf-Signalisierungsnachricht RS13 ist eine Abwandlung der Ruf-Signalisierungsnachricht RS1 aus Figur 5, wobei die Identifikationsdaten IDD1 anhand einer Prioritätskennung PR die Priorität der angeforderten Rufverbindung angeben. Das Endgerät TERB wertet die Prioritätskennung PR zur Ausgabe der durch die Identifikationsdaten IDD1 definierten Ruf-Signale aus, wobei beispielsweise bei einer hohen Priorität, z.B. bei einem dringlichen Anruf, der ankommende Ruf besonders laut signalisiert wird.

Auch die in Figur 8 gezeigte Ruf-Signalisierungsnachricht RS14 ist eine Abwandlung der Ruf-Signalisierungsnachricht RS1 aus Figur 5. Die Identifikationsdaten IDD1 enthalten in dieser Variante einen Index RM1, der auf eine in dem Endgerät TERB gespeicherte Rufmelodie hinweist, sowie eine Datentypkennung DT, mit der darauf hingewiesen wird, dass auf der angeforderten Rufverbindung lediglich im Hintergrund von dem Endgerät TERA auf das Endgerät TERB Daten übertragen werden sollen. Das Endgerät TERB gibt dann die über den Index RM1 indizierte Rufmelodie über den Lautsprecher SP aus, wobei die Rufmelodie aufgrund der auf geringe Dringlichkeit hinweisenden Datentypkennung DT leise ausgegeben wird.

Die über den Index RM1 indizierte Rufmelodie kann z.B. durch den Teilnehmer SUBB in dem Endgerät TERB konfiguriert worden sein oder von dem Endgerät TERA an das Endgerät TERB gesendet worden sein.

Es ist auch möglich, dass in dem Endgerät TERB ein Filter-Kriterium abgelegt ist und es empfangene Identifikationsdaten mit dem Filter-Kriterium vergleicht. Beispielsweise könnte in dem Endgerät TERB als Filter-Kriterium definiert sein, bei Empfang der Datentypkennung DT keine Ruf-Signale auszugeben.

Weitere Varianten der Erfindung sind ohne Weiteres möglich:

Die erfindungsgemäß ausgestaltete Vermittlungsstelle SW1 und das erfindungsgemäß gestaltete Gateway VGW1 könnten zu einer gemeinsamen Einrichtung kombiniert sein.

Ferner könnte die als Dienst-Vermittlungsstelle (SSP) dienende Vermittlungsstelle SW1 und der Dienst-Steuerknoten SCP zu einer kombinierten Einrichtung, einem sogenannten Service Switching and Control Point (SSCP) zusammengefasst werden.

Die Teilnehmeranschlussleitungen VA, VB1, VB2 und VB3 könnten auch als DSL-(Digital Subscriber Line) oder Powerline-Teilnehmeranschlussleitungen (= Telekommunikationsverbindungen über das elektrische Energienetz) ausgestaltet sein. Ferner könnten sie WLL-Verbindungen sein (WLL = Wireless Local Loop).

Es ist auch möglich, dass die Endgeräte TERA, TERB unmittelbar an das Datennetzwerk INT angeschlossen sind, beispielsweise unmittelbar an die Gateways VGW1, VGW2.

Die Gateways VGW1, VGW2 könnten in Endgeräten oder privaten Vermittlungsstellen integriert sein, beispielsweise könnte das Gateway VGW1 in das Endgerät TERB oder in die Vermittlungsstelle PB integriert sein.

Die Vermittlungsstellen SW1 und/oder SW2 könnten auch sogenannte Mobile-Switching Centres (MSC) eines Mobilfunk-Netzes sein und die mit diesen in Verbindung stehenden Endgeräte TERA, TERB, TE3, TE3 Mobilfunk-Endgeräte.

Das Endgerät TERA und/oder das Endgerät TERB und/oder die Vermittlungsstelle PB könnten jeweils ein Ziel-Programm-Modul ZPM sowie ein Quell-Programm-Modul QPM aufweisen.

Die Gateways VGW1, VGW2 oder zumindest ein Teil von deren Funktionen, z.B. die Funktionen hinsichtlich der VoiP-Protokolle, beispielsweise des obengenannten MGCP und/oder des MEGACOP, könnten in die Endgeräte TERA bzw. TERB integriert sein.

Die Ziel-Programm-Module ZPM und die Quell-Programm-Module QPM könnten von Netzwerkeinrichtungen des Telekommunikationsnetzes XTN und/oder des Datennetzwerks INT in die jeweiligen Ziel- bzw. Quell-Telekommunikationseinrichtungen heruntergeladen werden, z.B. von den Vermittlungsstellen SW1, SW2 und/oder den Gateways VGW1, VGW2 und/oder dem Dienst-Steuerknoten SCP in die Endgeräte TERA, TERB und/oder in die Vermittlungsstelle PB.

Es versteht sich, dass auch beliebige Kombinationen der in den Ansprüchen sowie in der Beschreibung angegebenen Maßnahmen und Anordnungen möglich sind.

## Patentansprüche

1. Verfahren zur Rufidentifikation eines über ein Telekommunikationsnetz (XTN, INT) Anrufenden (SUBA) an einer Ziel-Telekommunikationseinrichtung (TERB, PB), insbesondere an einem Ziel-Endgerät (TERB), eines Angerufenen (SUBB),
- bei dem der Ziel-Telekommunikationseinrichtung (TERB, PB) beim Aufbau einer Rufverbindung Identifikationsdaten (IDD1; IDD11, IDD12; IDD2) zur Identifikation des Anrufers (SUBA) übermittelt werden, und
- bei dem die Ziel-Telekommunikationseinrichtung (TERB, PB) die Identifikationsdaten (IDD1; IDD11, IDD12; IDD2) ausgibt,
wobei
- die Ziel-Telekommunikationseinrichtung (TERB, PB) die Identifikationsdaten (IDD1; IDD11, IDD12; IDD2) innerhalb einer Rufaufbau-Signalisierungsnachricht (RS1; RS11, RS12; RS2) erhält und
- die Ziel-Telekommunikationseinrichtung (TERB, PB) die Identifikationsdaten (IDD1; IDD11, IDD12; IDD2) oder daraus generierte Ausgabedaten als akustische und/oder visuelle und/oder mechanische Ruf-Signale anstelle eines durch die Ziel-Telekommunikationseinrichtung (TERB, PB) ausgewählten akustischen Rufzeichens ausgibt
**dadurch gekennzeichnet,**
- **dass** eine vorzugsweise dem Anrufer (SUBA) zugeordnete Quell-Telekommunikationseinrichtung (TERA) eine Anforderung (RS2) zum Senden der Identifikationsdaten (IDD1; IDD11, IDD12; IDD2) an eine Netzwerkeinrichtung des Telekommunikationsnetzes (XTN, INT) sendet,
- und **dass** die Netzwerkeinrichtung des Telekommunikationsnetzes (XTN, INT) die Identifikationsdaten (IDD1; IDD11, IDD12; IDD2) an die Ziel-Telekommunikationseinrichtung (TERB, PB) versendet.

2. Verfahren nach Anspruch 1, **dadurch gekennzeichnet, dass** die Ruf-Signalisierungsnachricht (RS1; RS11, RS12; RS2) oder die Identifikationsdaten (IDD1; IDD11, IDD12; IDD2) eine Qualitätskennung (PR, DT) für die jeweilige Rufverbindung, Insbesondere eine Prioritätskennung (PR) für die Rufverbindung und/oder eine Typkennung (DT) von im Rahmen der Rufverbindung zu versendenden Informationen, enthalten.

3. Verfahren nach Anspruch 1, **dadurch gekennzeichnet, dass** die Identifikationsdaten (IDD11, IDD12) segmentiert in der Rufaufbau-Signalisierungsnachricht (RS11) und zumindest einer Folgenachricht (RS12) an die Ziel-Telekommunikationseinrichtung (TERB, PB) übertragen werden.

4. Verfahren nach Anspruch 3, **dadurch gekennzeichnet, dass** die Ziel-Telekommunikationseinrichtung (TERB, PB) mit der Ausgabe der in der Rufaufbau-Signalisierungsnachricht (RS11) enthaltenen Identifikationsdaten (IDD11) auch dann beginnt, wenn die Identifikationsdaten (IDD11, IDD12) noch unvollständig sind, vorzugsweise noch vor Empfang der mindestens einen Folgenachricht (RS12).

5. Verfahren nach Anspruch 1, **dadurch gekennzeichnet, dass** die Ziel-Telekommunikationseinrichtung (TERB, PB) zur Wiedergabe der Identifikationsdaten (IDD1; IDD11, IDD12; IDD2) einen Klingelzeichenerzeuger (RING) und/oder einen Lautsprecher (SP) aktiviert.

6. Verfahren nach Anspruch 1, **dadurch gekennzeichnet, dass** die Ziel-Telekommunikationseinrichtung (TERB, PB) aus den Identifikationsdaten (IDD1; IDD11, IDD12; IDD2) eine Rufmelodie und/oder eine Klingelsequenz entnimmt.

7. Verfahren nach Anspruch 1, **dadurch gekennzeichnet, dass** die Ziel-Telekommunikationseinrichtung (TERB, PB) die empfangenen Identifikationsdaten (IDD1; IDD11, IDD12; IDD2) anhand zumindest eines vorbestimmten Kriteriums filtert und in Abhängigkeit dem jeweiligen Ergebnis die Identifikationsdaten (IDD1; IDD11, IDD12; IDD2) als akustische und/oder visuelle und/oder mechanische Ruf-Signale ausgibt.

8. Verfahren nach Anspruch 1, **dadurch gekennzeichnet, dass** als Ziel-Telekommunikationseinrichtung (TERB, PB) eine lokale Vermittlungsstelle (PB), insbesondere eine private Vermittlungsstelle eingesetzt wird, dass die Ziel-Telekommunikationseinrichtung (TERB, PB) aus den Identifikationsdaten (IDD1; IDD11, IDD12; IDD2) von einem mit ihr verbundenen Endgerät (TELB1, TELB2) ausgebbare, insbesondere eine Klingelzeichensequenz und/oder eine Rufmelodie enthaltende Ausgabedaten generiert und dass die Ziel-Telekommunikationseinrichtung (TERB, PB) die Ausgabedaten an das Endgerät (TELB1, TELB2) versendet.

9. Netzwerkeinrichtungs-Programm-Modul (NPM) für eine Netzwerkeinrichtung, (SW2, VGW1, VGW2, SCP) insbesondere für eine Vermittlungsstelle (SW2) und/oder für einen Service Control Point (SCP) eines Intelligenten Netzes und/oder für ein Gateway (VGW1, VGW2) zu einem Datennetzwerk (INT), zur Rufidentifikation eines über ein Telekommunikationsnetz (XTN, INT) Anrufenden (SUBA) an einer Ziel-Telekommunikationseinrichtung (TERB, PB) eines Angerufenen (SUBB),
- das Programmcode enthält, der von einem Steuermittel (CPUSW) der Netzwerkeinrichtung (SW2, VGW1, VGW2, SCP) ausgeführt werden kann,
- das Empfangsmittel (RCVNPM) zum Empfangen einer von einer Quell-Telekommunikationseinrichtung (TERA) des Anrufers (SUBA) gesendeten Anforderungsnachricht (RS2) aufweist, mit der die Netzwerkeinrichtung zum Übermitteln von Identifikationsdaten (IDD1; IDD11, IDD12; IDD2) zur Identifikation des Anrufers (SUBA) an die Ziel-Telekommunikationseinrichtung (TERB, PB) aufgefordert wird, wobei die Ziel-Telekommunikationseinrichtung (TERB, PB) die Identifikationsdaten (IDD1; IDD11, IDD12; IDD2) oder daraus generierte Ausgabedaten als akustische und/oder visuelle und/oder mechanische Ruf-Signale anstelle eines durch die Ziel-Telekommunikationseinrichtung (TERB, PB) ausgewählten akustischen Rufzeichens ausgeben kann, und
- das Sendemittel (SNDNPM) zum Senden der identifikationsdaten (IDD1; IDD11, IDD12; IDD2) innerhalb einer an die Ziel-Telekommunikationseinrichtung (TERB, PB) gerichteten Rufaufbau-Signalisierungsnachricht (RS1; RS11, RS12; RS2) aufweist.

10. Netzwerkeinrichtung (SW2, VGW1, VGW2, SCP), insbesondere Vermittlungsstelle (SW2), Service Control Point (SCP) eines Intelligenten Netzes oder Gateway (VGW1, VGW2) zu einem Datennetzwerk (INT), zur Rufidentifikation eines über ein Telekommunikationsnetz (XTN, INT) Anrufenden (SUBA) an einer Ziel-Telekommunikationseinrichtung (TERB, PB) eines Angerufenen (SUBB),
- die Empfangsmittel (TRSW) zum Empfangen einer von einer Quell-Telekommunikationseinrichtung (TERA) des Anrufers (SUBA) gesendeten Anforderungsnachricht (RS2) aufweist, mit der die Netzwerkeinrichtung (SW2, VGW1, VGW2, SCP) zum Übermitteln von Identifikationsdaten (IDD1; IDD11, IDD12; IDD2) zur Identifikation des Anrufers (SUBA) an zumindest eine Ziel-Telekommunikationseinrichtung (TERB, PB) eines Angerufenen (SUBB) aufgefordert wird, wobei die Ziel-Telekommunikationseinrichtung (TERB, PB) die Identifikationsdaten (IDD1; IDD11, IDD12; IDD2) oder daraus generierte Ausgabedaten als akustische und/oder visuelle und/oder mechanische Ruf-Signale anstelle eines durch die Ziel-Telekommunikationseinrichtung (TERB, PB) ausgewählten akustischen Rufzeichens ausgeben kann, und
- die Sendemittel (TRSW) zum Senden der Identifikationsdaten (IDD1; IDD11, IDD12; IDD2) innerhalb einer an die Ziel-Telekommunikationseinrichtung (TERB, PB) gerichteten Rufaufbau-Signalisierungsnachricht (RS1; RS11, RS12; RS2) aufweist.

11. Quell-Programm-Modul (QPM) zur Rufidentifikation eines über ein Telekommunikationsnetz (XTN, INT) Anrufenden (SUBA) an einer Ziel-Telekommunikationseinrichtung (TERB, PB), insbesondere an einem Ziel-Endgerät (TERB), eines Angerufenen (SUBB),
- das Programmcode enthält, der von einem Steuermittel einer Quell-Telekommunikationseinrichtung (TERA), insbesondere eines Quell-Endgeräts (TERA), ausgeführt werden kann,
- das Erfassungsmittel (RCVQPM) zum Erfassen einer durch den Anrufer an der Quell-Telekommunikationseinrichtung (TERA) eingegebenen Anforderung (RS2) zum Senden der Identifikationsdaten (IDD1; IDD11, IDD12; IDD2) zur Rufidentifikation des Anrufers (SUBA) durch eine Netzwerkeinrichtung des Telekommunikationsnetzes (XTN, INT) aufweist, und
- das Sendemittel (SNDQPM) zum Senden an die Netzwerkeinrichtung des Telekommunikationsnetzes (XTN, INT) der Anforderung (RS2) zum Senden der Identifikationsdaten (IDD1; IDD11, IDD12; IDD2) innerhalb einer an die Ziel-Telekommunikationseinrichtung (TERB, PB) gerichteten Rufaufbau-Signalisierungsnachricht (RS1; RS11, RS12; RS2) aufweist, wobei die Ziel-Telekommunikationseinrichtung (TERB, PB) die Identifikationsdaten (IDD1; IDD11, IDD12; IDD2) oder daraus generierte Ausgabedaten als akustische und/oder visuelle und/oder mechanische Ruf-Signale anstelle eines durch die Ziel-Telekommunikationseinrichtung (TERB, PB) ausgewählten akustischen Rufzeichens ausgeben kann.

12. Quell-Telekommunikationseinrichtung (TERA), insbesondere Quell-Endgerät (TERA), zur Rufidentifikation eines über ein Telekommunikationsnetz (XTN, INT) Anrufenden (SUBA) an einer Ziel-Telekommunikationseinrichtung (TERB, PB), insbesondere an einem Ziel-Endgerät (TERB), eines Angerufenen (SUBB),
- die Erfassungsmittel (KEY, MIC, QPM) zum Erfassen einer durch den Anrufer eingegebenen Anforderung (RS2) zum Senden der Identifikationsdaten (IDD1; IDD11, IDD12; IDD2) zur Rufidentifikation des Anrufers (SUBA) durch eine Netzwerkeinrichtung des Telekommunikationsnetzes (XTN, INT) aufweist, und
- die Sendemittel (TRTER) zum Senden an die Netzwerkeinrichtung des Telekommunikationsnetzes (XTN, INT) der Anforderung (RS2) zum Senden der Identifikationsdaten (IDD1; IDD11, IDD12; IDD2) innerhalb einer an die Ziel-Telekommunikationseinrichtung (TERB, PB) gerichteten Rufaufbau-Signalisierungsnachricht (RS1; RS11, RS12; RS2) aufweist, wobei die Ziel-Telekommunikationseinrichtung (TERB, PB) die Identifikationsdaten (IDD1; IDD11, IDD12; IDD2) oder daraus generierte Ausgabedaten als akustische und/oder visuelle und/oder mechanische Ruf-Signale anstelle eines durch die Ziel-Telekommunikationseinrichtung (TERB, PB) ausgewählten akustischen Rufzeichens ausgeben kann.

13. Speichermittel, insbesondere Diskette oder CD-ROM, Digital Versatile Disc, Festplattenlaufwerk oder dergleichen, mit einem darauf gespeicherten Netzwerkeinrichtungs-Programm-Modul (NPM) nach Anspruch 9und/oder mit einem darauf gespeicherten Quell-Programm-Modul (QPM) nach Anspruch 11.

## Claims

1. Process for the identification of a calling subscriber (SUBA) calling a target telecommunications device (TERB, PB), in particular a target terminal device (TERB), of a called subscriber (SUBB) via a telecommunications network (XTN, INT),
- wherein identification data (IDD1, IDD11, IDD12, IDD2) for identification of the calling subscriber (SUBA) are forwarded to the target telecommunications device (TERB, PB) during the call setup, and
- wherein the target telecommunications device (TERB, PB) outputs the identification data (IDD1; IDD11; IDD12; IDD2),
wherein
- the target telecommunications device (TERB, PB) receives the identification data (IDD1, IDD11, IDD12, IDD2) within a call setup signalling message (RS1, RS11, RS12, RS2), and
- the target telecommunications device (TERB, PB) outputs the identification data (IDD1, IDD11, IDD12, IDD2) or output data generated therefrom in the form of acoustic and/or visual and/or mechanical call signals instead of an acoustic call signal selected by the target telecommunications device (TERB, PB) **characterised in that**
- a source telecommunications device (TERB) preferably assigned to the calling subscriber (SUBA) sends a request (RS2) to a network device of the telecommunications network (XTN, INT) to send the identification data (IDD1, IDD11, IDD12, IDD2),
- and that the network device of the telecommunications network (XTN, INT) sends the identification data (IDD1, IDD11, IDD12, IDD2) to the target telecommunications device (TERB, PB).

2. Process according to Claim 1, **characterised in that** the call signalling message (RS1, RS11, RS12, RS2) or the identification data (IDD1, IDD11, IDD12, IDD2) comprise a quality identifier (PR, DT) for the pertinent call connection, in particular a priority identifier (PR) for the call connection and/or a data type identifier (DT) for the data to be sent within the scope of the call connection.

3. Process according to Claim 1, **characterised in that** the identification data (IDD11, IDD12) are transmitted to the target telecommunications device (TERB, PB) in a segmented manner in the call setup signalling message (RS11) and in at least one subsequent message (RS12).

4. Process according to Claim 3, **characterised in that** the target telecommunications device (TERB, PB) also starts outputting the identification data (IDD11) contained in the call setup signalling message (RS11) even if the identification data (IDD11, IDD12) are still incomplete, preferably even before receiving the at least one subsequent message (RS12).

5. Process according to Claim 1, **characterised in that**, in order to reproduce the identification data (IDD1, IDD11, IDD12, IDD2), the target telecommunications device (TERB, PB) activates a ringtone generator (RING) and/or a loudspeaker (SP).

6. Process according to Claim 1, **characterised in that** the target telecommunications device (TERB, PB) extracts a call tune or a ringing sequence from the identification data (IDD1, IDD11, IDD12, IDD2).

7. Process according to Claim 1, **characterised in that** the target telecommunications device (TERB, PB) filters the received identification data (IDD1, IDD11, IDD12, IDD2) by means of at least one predefined criterion, and, depending on the result of such filtering, outputs the identification data (IDD1, IDD11, IDD12, IDD2) as acoustic and/or visual and/or mechanical call signals.

8. Process according to Claim 1, **characterised in that** the target telecommunications device (TERB, PB) is a local exchange (PB), in particular a private branch exchange, **in that** from the identification data (IDD1, IDD11, IDD12, IDD2) to be output from a terminal device connected with it (TELB1, TELB2), the target telecommunications device (TERB, PB) generates, in particular, output data containing a ring tone sequence and/or a call tune and that the target telecommunications device (TERB, PB) sends the output data to the terminal device (TELB1, TELB2).

9. Network device programme module (NPM) for a network device, (SW2, VGW1, VGW1, SCP), in particular for an exchange (SW2) and/or for a gateway (VGW1, VGW2) to a data network (INT), for call identification of a calling subscriber (SUBA) calling via a telecommunications network (XTN, INT) in a target terminal device (TERB, PB) of a called subscriber (SUBB),
- containing programme code that can be executed by control means (CPUSW) of the network device (SW2, VGW1, VGW1, SCP),
- having receiving means (RCVNPM) for receiving a request message (RS2) from the calling subscriber (SUBA) sent by a source telecommunications device (TERA), by means of which the network device is requested to transmit identification data (IDD1, IDD11, IDD12, IDD2) for the identification of the calling subscriber (SUBA) to the target telecommunications device (TERB, PB), wherein the target telecommunications device (TERB, PB) can output the identification data (IDD1, IDD11, IDD12, IDD2) or output data generated therefrom in the form of acoustic and/or visual and/or mechanical call signals instead of an acoustic call signal selected by the target telecommunications device (TERB, PB), and
- having sending means (SNDNPM) for sending the identification data (IDD1, IDD11, IDD12, IDD2) within a call setup signalling message (RS1, RS11, RS12, RS2) directed at a target telecommunications device (TERB, PB).

10. Network device (SW2, VGW1, VGW2, SCP), in particular an exchange (SW2), Service Control Point (SCP) of an intelligent network and/or a gateway (VGW1, VGW2) to a data network (INT), for call identification of a calling subscriber (SUBA) calling via a telecommunications network (XTN, INT) in a target terminal device (TERB, PB) of a called subscriber (SUBB),
- having receiving means (TRSW) for receiving a request message (RS2) from the calling subscriber (SUBA) sent by a source telecommunications device (TERA), by means of which the network device (SW2, VGW1, VGW1, SCP) is requested to transmit identification data (IDD1, IDD11, IDD12, IDD2) for the identification of the calling subscriber (SUBA) to at least one target telecommunications device (TERB, PB) of a called subscriber (SUBB), wherein the target telecommunications device (TERB, PB) can output the identification data (IDD1, IDD11, IDD12, IDD2) or output data generated therefrom in the form of acoustic and/or visual and/or mechanical call signals instead of an acoustic call signal selected by the target telecommunications device (TERB, PB), and
- the sending means (TRSW) for sending the identification data (IDD1, IDD11, IDD12, IDD2) within a call setup signalling message (RS1, RS11, RS12, RS2) directed at the target telecommunications device (TERB, PB).

11. Source Programme Module (QPM) for the caller identification of a calling subscriber (SUBA) calling a target terminal (TERB, PB), in particular a target terminal device (TERB), of a called subscriber (SUBB) via a telecommunications network (XTN, INT),
- containing programme code that can be executed by control means of a source telecommunications device (TERA), in particular of a source terminal (TERA),
- having receiving means (RCVQPM) for receiving a request (RS2) input by the calling subscriber at the source telecommunications device (TERA) to send the identification data (IDD1, IDD11, IDD12, IDD2) for identification of the call from the calling subscriber (SUBA) via a network device of the telecommunications network (XTN, INT), and
- having sending means (SNDQPM) for sending the request (RS2) to send the identification data (IDD1, IDD11, IDD12, IDD2) to the network device of the telecommunications network (XTN, INT) within a call setup signalling message (RS1, RS11, RS12, RS2) directed at the target telecommunications device (TERB, PB), wherein the target telecommunications device (TERB, PB) is able to output the identification data (IDD1, IDD11, IDD12, IDD2) or output data generated therefrom in the form of acoustic and/or visual and/or mechanical call signals instead of an acoustic call signal selected by the target telecommunications device (TERB, PB)

12. Source telecommunications device (TERA), in particular a source terminal (TERA), for caller identification of a calling subscriber (SUBA) calling a target telecommunications device (TERB, PB), in particular a target terminal device (TERB), of a called subscriber (SUBB) via a telecommunications network (XTN, INT),
- having receiving means (KEY, MIC, QPM) for receiving a request (RS2) input by the calling subscriber to send the identification data (IDD1, IDD11, IDD12, IDD2) for identification of the call from the calling subscriber (SUBA) via a network device of the telecommunications network (XTN, INT), and
- having sending means (TRTER) for sending the request (RS2) to send the identification data (IDD1, IDD11, IDD12, IDD2) to the network device of the telecommunications network (XTN, INT) within a call setup signalling message (RS1, RS11, RS12, RS2) directed at the target telecommunications device (TERB, PB), wherein the target telecommunications device (TERB, PB) is able to output the identification data (IDD1, IDD11, IDD12, IDD2) or output data generated therefrom in the form of acoustic and/or visual and/or mechanical call signals instead of an acoustic call signal selected by the target telecommunications device (TERB, PB)

13. Storage means, in particular floppy disks or CD-ROM, Digital Versatile Disc, hard drives or similar, with a Network Device Programme Module (NPM) according to the Claim and/or with a Source Programme Module (QPM) according to Claim 11.

## Revendications

1. Procédé d'identification d'appel d'un appelant (SUBA) via un réseau de télécommunication (XTN, INT) sur un équipement terminal de télécommunication cible (TERB, PB), notamment sur un terminal cible (TERB), d'un appelé (SUBB),
- dans lequel des données d'identification (IDD1 ; IDD11, IDD12 ; IDD2) pour l'identification de l'appelant (SUBA) sont transmises à l'équipement terminal de télécommunication cible (TERB, PB) lors de l'établissement d'un appel, et
- dans lequel l'équipement terminal de télécommunication cible (TERB, PB) affiche à l'écran les données d'identification (IDD1 ; IDD11, IDD12 ; IDD2),
selon lequel
- l'équipement terminal de télécommunication cible (TERB, PB) reçoit les données d'identification (IDD1 ; IDD11, IDD12 ; IDD2) dans un message de signalisation d'établissement d'appel (RS1 ; RS11, RS12 ; RS2) et
- l'équipement terminal de télécommunication cible (TERB, PB) affiche à l'écran les données d'identification (IDD1 ; IDD11, IDD12 ; IDD2) ou les données de sortie générées à partir des données d'identification sous forme de signaux d'appel acoustiques et/ou visuels et/ou mécaniques au lieu d'un signal d'appel acoustique sélectionné par l'équipement terminal de télécommunication cible (TERB, PB) **caractérisé en ce que**
- un équipement terminal de télécommunication source (TERB) associé de préférence à l'appelant (SUBA) transmet une demande (RS2) de transmission des données d'identification (IDD1 ; IDD11, IDD12 ; IDD2) à un équipement terminal de réseau du réseau de télécommunication (XTN, INT),
- et **en ce que** l'équipement terminal de réseau du réseau de télécommunication (XTN, INT) transmet les données d'identification (IDD1 ; IDD11, IDD12 ; IDD2) à l'équipement terminal de télécommunication cible (TERB, PB).

2. Procédé selon la revendication 1, **caractérisé en ce que** le message de signalisation d'appel (RS1 ; RS11, RS12 ; RS2) ou les données d'identification (IDD1 ; IDD11, IDD12 ; IDD2) contiennent un code de qualité (PR, DT) pour l'appel respectif, notamment un code de priorité (PR) pour l'appel et/ou un code de type (DT) des informations à transmettre dans le cadre de l'appel.

3. Procédé selon la revendication 1, **caractérisé en ce que** les données d'identification (IDD11, IDD12) sont transmises à l'équipement terminal de télécommunication cible (TERB, PB) en étant segmentées dans le message de signalisation d'établissement d'appel (RS11) et au moins une réponse automatique (RS12).

4. Procédé selon la revendication 3, **caractérisé en ce que** l'équipement terminal de télécommunication cible (TERB, PB) commence alors à afficher à l'écran les données d'identification (IDD11) contenues dans le message de signalisation d'établissement d'appel (RS11), si les données d'identification (IDD11, IDD12) sont encore incomplètes, de préférence avant la réception d'au moins une réponse automatique (RS12).

5. Procédé selon la revendication 1, **caractérisé en ce que** l'équipement terminal de télécommunication cible (TERB, PB) active un générateur de signal de sonnerie (RING) et/ou un haut-parleur (SP) pour restituer les données d'identification (IDD1 ; IDD11, IDD12 ; IDD2).

6. Procédé selon la revendication 1, **caractérisé en ce que** l'équipement terminal de télécommunication cible (TERB, PB) effectue une mélodie d'appel et/ou une séquence de sonnerie à partir des données d'identification (IDD1 ; IDD11, IDD12 ; IDD2).

7. Procédé selon la revendication 1, **caractérisé en ce que** l'équipement terminal de télécommunication cible (TERB, PB) filtre les données d'identification (IDD1 ; IDD11, IDD12 ; IDD2) reçues à l'aide d'au moins un critère prédéfini et affiche à l'écran les données d'identification (IDD1 ; IDD11, IDD12 ; IDD2) en fonction du résultat respectif sous forme de signaux d'appel acoustiques et/ou visuels et/ou mécaniques.

8. Procédé selon la revendication 1, **caractérisé en ce qu'**un central téléphonique local (PB), notamment un central téléphonique privé est utilisé comme équipement terminal de télécommunication cible (TERB, PB), **en ce que** l'équipement terminal de télécommunication cible (TERB, PB) génère, à partir des données d'identification (IDD1 ; IDD11, IDD12 ; IDD2) d'un terminal (TELB1, TELB2) relié à lui, des données de sortie contenant, notamment une séquence de signal de sonnerie et/ou une mélodie d'appel et **en ce que** l'équipement terminal de télécommunication cible (TERB, PB) transmet les données de sortie au terminal (TELB1, TELB2).

9. Module de programme d'équipement terminal de réseau (NPM) pour un équipement terminal de réseau, (SW2, VGW1, VGW2, SCP) notamment pour un central téléphonique (SW2) et/ou un Point de Commande de Services (SCP) d'un réseau intelligent et/ou une passerelle (VGW1, VGW2) vers un réseau de données (INT), pour l'identification d'appel d'un appelant (SUBA) via un réseau de télécommunication (XTN, INT) sur un équipement terminal de télécommunication cible (TERB, PB) d'un appelé (SUBB),
- contenant le code de programme, qui peut être exécuté par des moyens de commande (CPUSW) de l'équipement terminal de réseau (SW2, VGW1, VGW2, SCP),
- présentant les moyens de réception (RCVNPM) pour la réception d'un message de demande (RS2) transmis par un équipement terminal de télécommunication source (TERA) de l'appelant (SUBA), par lequel on demande à l'équipement terminal de réseau de transmettre les données d'identification (IDD1 ; IDD11, IDD12 ; IDD2) à l'équipement terminal de télécommunication cible (TERB, PB) pour l'identification de l'appelant (SUBA), selon lequel l'équipement terminal de télécommunication cible (TERB, PB) peut afficher à l'écran les données d'identification (IDD1 ; IDD11, IDD12 ; IDD2) ou les données de sortie générées à partir des données d'identification sous forme de signaux d'appel acoustiques et/ou visuels et/ou mécaniques au lieu d'un signal d'appel acoustique sélectionné par l'équipement terminal de télécommunication cible (TERB, PB), et
- présentant les moyens de transmission (SNDNPM) pour la transmission des données d'identification (IDD1 ; IDD11, IDD12 ; IDD2) dans un message de signalisation d'établissement d'appel (RS1 ; RS11, RS12 ; RS2) adressé à l'équipement terminal de télécommunication cible (TERB, PB).

10. Équipement terminal de réseau, (SW2, VGW1, VGW2, SCP), notamment central téléphonique (SW2), Point de Commande de Services (SCP) d'un réseau intelligent ou passerelle (VGW1, VGW2) vers un réseau de données (INT), d'identification d'appel d'un appelant (SUBA) via un réseau de télécommunication (XTN, INT) sur un équipement terminal de télécommunication cible (TERB, PB) d'un appelé (SUBB),
- présentant les moyens de réception (TRSW) pour la réception d'un message de demande (RS2) transmis par un équipement terminal de télécommunication source (TERA) de l'appelant SUBA), par lequel on demande à l'équipement terminal de réseau (SW2, VGW1, VGW2, SCP) de transmettre les données d'identification (IDD1 ; IDD11, IDD12 ; IDD2) de l'appelant (SUBA) à au moins un équipement terminal de télécommunication cible (TERB, PB) d'un appelant (SUBB), selon lequel l'équipement terminal de télécommunication cible (TERB, PB) peut afficher à l'écran les données d'identification (IDD1 ; IDD11, IDD12 ; IDD2) ou les données de sortie générées à partir des données d'identification sous forme de signaux d'appel acoustiques et/ou visuels et/ou mécaniques au lieu d'un signal d'appel acoustique sélectionné par l'équipement terminal de télécommunication cible (TERB, PB), et
- présentant les moyens de transmission (TRSW) pour la transmission des données d'identification (IDD1 ; IDD11, IDD12 ; IDD2) dans un message de signalisation d'établissement d'appel (RS1 ; RS11, RS12 ; RS2) adressé à l'équipement terminal de télécommunication cible (TERB, PB).

11. Module de programme source (QPM) d'identification d'appel d'un appelant (SUBA) via un réseau de télécommunication (XTN, INT) sur un équipement terminal de télécommunication cible (TERB, PB), notamment sur un terminal cible (TERB), d'un appelé (SUBB),
- contenant le code de programme, qui peut être exécuté par des moyens de commande d'un équipement terminal de télécommunication source (TERA), notamment d'un terminal source (TERA),
- présentant les moyens de détection (RCVQPM) pour la détection d'une demande (RS2) de transmission des données d'identification (IDD1 ; IDD11, IDD12 ; IDD2) entrée par l'appelant sur l'équipement terminal de télécommunication source (TERA) pour l'identification d'appel de l'appelant (SUBA) par un équipement terminal de réseau du réseau de télécommunication (XTN, INT), et
- présentant les moyens de transmission (SNDQPM) pour la transmission de la demande (RS2) de transmission des données d'identification (IDD1 ; IDD11, IDD12 ; IDD2) à l'équipement terminal de réseau du réseau de télécommunication (XTN, INT) dans un message de signalisation d'établissement d'appel (RS1 ; RS11, RS12 ; RS2) adressé à l'équipement terminal de télécommunication cible (TERB, PB), selon lequel l'équipement terminal de télécommunication cible (TERB, PB) peut afficher à l'écran les données d'identification (IDD1 ; IDD11, IDD12 ; IDD2) ou les données de sortie générées à partir des données d'identification sous forme de signaux d'appel acoustiques et/ou visuels et/ou mécaniques au lieu d'un signal d'appel acoustique sélectionné par l'équipement terminal de télécommunication cible (TERB, PB).

12. Équipement terminal de télécommunication source (TERA), notamment d'un terminal source (TERA), pour l'identification d'appel d'un appelant (SUBA) via un réseau de télécommunication (XTN, INT) sur un équipement terminal de télécommunication cible (TERB, PB), notamment sur un terminal cible (TERB), d'un appelé (SUBB),
- présentant les moyens de détection (KEY, MIC, QPM) pour la détection d'une demande (RS2) de transmission des données d'identification (IDD1 ; IDD11, IDD12 ; IDD2) entrée par l'appelant pour l'identification d'appel de l'appelant (SUBA) par un équipement terminal de réseau du réseau de télécommunication (XTN, INT), et
- présentant les moyens de transmission (TRTER) pour la transmission de la demande (RS2) de transmission des données d'identification (IDD1 ; IDD11, IDD12 ; IDD2) à l'équipement terminal de réseau du réseau de télécommunication (XTN, INT) dans un message de signalisation d'établissement d'appel (RS1 ; RS11, RS12 ; RS2) adressé à l'équipement terminal de télécommunication cible (TERB, PB), selon lequel l'équipement terminal de télécommunication cible (TERB, PB) peut afficher à l'écran les données d'identification (IDD1 ; IDD11, IDD12 ; IDD2) ou les données de sortie générées à partir des données d'identification sous forme de signaux d'appel acoustiques et/ou visuels et/ou mécaniques au lieu d'un signal d'appel acoustique sélectionné par l'équipement terminal de télécommunication cible (TERB, PB).

13. Support de stockage, notamment, disquette ou CD-Rom, disque numérique versatile, unité de disque dur ou analogues, comportant un module de programme d'équipement terminal de réseau (NPM) stocké sur celui-ci selon la revendication 9 et/ou un module de programme source (QPM) stocké sur celui-ci selon la revendication 11.
